# EUROPÄISCHE PATENTSCHRIFT

(11) **EP 2 093 244 B1**
(45) Veröffentlichungstag und Bekanntmachung des Hinweises auf die Patenterteilung: **01.04.2015**
(21) Anmeldenummer: 09152883.6
(22) Anmeldetag: 16.02.2009
(51) Int. Cl.: C08G 65/26

(54) **Neue Alkoxysilylgruppen tragende Polyetheralkohole durch Alkoxylierung epoxidfunktioneller Alkoxysilane an Doppelmetallcyanid (DMC)-Katalysatoren, sowie Verfahren zu deren Herstellung**
New polyether alcohols containing alkoxysilyl groups by means of alkoxylisation of epoxide functional alkoxy silanes to double metal cyanide (DMC) catalysts and method for its production
Alcools de polyéther porteurs de nouveaux groupes alkoxysilyle par alkoxylation d'alkoxysilanes époxydes fonctionnels sur des catalyseurs de cyano-métalliques doubles (DMC) et leur procédé de fabrication

(30) Priorität: 21.02.2008 DE 102008000360
(43) Veröffentlichungstag der Anmeldung: 26.08.2009
(73) Patentinhaber: Evonik Degussa GmbH, 45128 Essen (DE)
(72) Erfinder: Schubert, Frank, Dr., 47506 Neukirchen-Vluyn (DE); Knott, Wilfried, Dr., 45355 Essen (DE)
(74) Vertreter: Lang, Arne

(56) Entgegenhaltungen:
- EP-A- 1 586 597
- WO-A-01/21718
- WO-A-2005/078036
- WO-A-2008/004482
- US-A- 3 446 757
- HSIEN-MING KAO, E.A.: "Multinuclear solid-state NMR chracterization, ion dissociation, and dynamic properties of lithium-doped organic-inorganic hybrid electrolytes based on ureasils" MACRMOLECULES, Bd. 40, 2007, Seiten 8673-8683, XP002529099

## Beschreibung

Die Erfindung betrifft neue Alkoxysilylgruppen tragende Polyetheralkohole durch Alkoxylierung epoxidfunktioneller Alkoxysilane an DMC-Katalysatoren, sowie Verfahren zu deren Herstellung.

Konventionelle Polyetheralkohole, oft auch kurz einfach als Polyether bezeichnet und vorwiegend aus Propylenoxid und Ethylenoxid aufgebaut, sind seit langem bekannt und werden in großen Mengen technisch hergestellt. Sie dienen unter Anderem durch Umsetzung mit Polyisocyanaten als Ausgangsverbindungen zur Herstellung von Polyurethanen oder aber auch zur Herstellung von Tensiden.

Die meisten Verfahren zur Herstellung von Alkoxylierungsprodukten (Polyethern) bedienen sich basischer Katalysatoren wie z.B. der Alkalihydroxide und der Alkalimethylate.
Besonders verbreitet und seit vielen Jahren bekannt ist der Einsatz von KOH. Typischerweise wird ein meist niedermolekularer hydroxy-funktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedin-gungen bei dieser sogenannten Living-Polymerisation fördern verschiedene Nebenreaktionen. Durch Umlagerung von Propylenoxid in Allylalkohol, der seinerseits als Kettenstarter fungiert, und Kettenabbruchreaktionen entstehen Polyether mit relativ breiter Molmassenverteilung und ungesättigten Nebenprodukten. Insbesondere mit Allylalkohol als Startalkohol bringt die unter alkalischer Katalyse durchgeführte Alkoxylierungsreaktion auch Propenylpolyether hervor. Diese Propenylpolyether erweisen sich bei der hydrosilylierenden Weiterverarbeitung zu SiC-gestützten Siliconpolyether-Copolymeren als unreaktive Beiprodukte und sind zudem - durch die hydrolytische Labilität der in ihnen enthaltenen Vinyletherbindung und Freisetzung von Propionaldehyd - unerwünschte - Quelle olfaktorischer Produktbelastungen. Dies ist beispielsweise in der EP-A-1431331 beschrieben.

Die WO 2005/078036 beschreibt die Herstellung von teilkristallinen Polyethercopolymeren aus Propylenoxid und einem weiteren epoxidischen Comonomer, dass mindestens einen Substituenten aufweist, der keine Methylgruppe und auch kein Wasserstoff ist. Es werden nach langen Reaktionszeiten isotaktische Copolymere des Propylenoxids erhalten, allerdings keine DMC-Katalysatoren verwendet.

Zu den Nachteilen der basisch katalysierten Alkoxylierung zählt zweifelsfrei auch die Notwendigkeit, die erhaltenen Reaktionsprodukte mit Hilfe eines Neutralisationsschrittes von der aktiven Base zu befreien. Zwingend erforderlich sind dann die destillative Abtrennung des bei der Neutralisation entstehenden Wassers sowie die Abtrennung des gebildeten Salzes durch Filtration. Neben der basenkatalysierten Reaktion sind auch saure Katalysen zur Alkoxylierung bekannt. So wird in DE 10 2004 007561 die Verwendung von HBF₄ und von Lewis-Säuren wie z.B. BF₃, AlCl₃ und SnCl₄ in der Alkoxylierungstechnologie beschrieben.

Als nachteilig bei der säurekatalysierten Polyethersynthese erweist sich die mangelhafte Regioselektivität bei der Ringöffnung unsymmetrischer Oxirane wie z.B. Propylenoxid, die dazu führt, dass in nicht eindeutig zu steuernder Weise Polyoxyalkylenketten mit teils sekun dären und primären OH-Termini erhalten werden. Wie im Falle der basenkatalysierten Alkoxylierungsreaktion ist auch hier eine Aufarbeitungssequenz von Neutralisation, Destillation und Filtration unabdingbar. Wird Ethylenoxid als Monomer in die säurekatalysierte Polyethersynthese eingebracht, so ist mit der Bildung von Dioxan als unerwünschtem Nebenprodukt zu rechnen.
Säure- und/oder Base-labile Stoffsysteme können unter den dargelegten Bedingungen jedoch keinesfalls erfolgreich alkoxyliert werden. In besonderem Maße trifft das auf Organokieselsäurederivate wie Alkoxysilanderivate zu, die eine ausgeprägte Tendenz zur Säure- bzw- Basen-induzierten Kondensations- und Vernetzungsreaktion zeigen. Dieses ist umso mehr von Bedeutung, als dass sowohl die Säure- als auch Basen-induzierte Alkoxylierungsreaktion üblicherweise einer im wässrigen Medium nachgeschalteten Aufarbeitung bedürfen (Neutralisation, Salzabtrennung, Destillation zur Entfernung des Wassers).
Organische Alkoxysilanverbindungen wie 3-Glycidyloxy-propyltrimethoxy- bzw. -triethoxysilan, die z.B. unter den Handelsnamen DYNASYLAN^{®} GLYMO bzw. DYNASYLAN^{®} GLYEO (Warenzeichen der Evonik Degussa GmbH) erhältlich sind, nehmen Eingang in die Herstellung von organisch modifizierten Netzwerken beim Sol-Gel-Verfahren, das als Schlüsselprozess zur Herstellung von Nanocompositen dient, die Beschichtungssysteme mit verbesserten Eigenschaften im Hinblick auf Härte, Kratz- und Abriebfestigkeit, Temperaturresistenz sowie Lösemittel- und Säurebeständigkeit liefern. Alkoxysilanverbindungen finden des Weiteren vielfältigen Eingang in Dicht- und Klebstoffe sowie generell als reaktive Haftvermittler und Primer für verschiedene Substrate wie Metalle, Glas und Glasfasern/Glasgewebe für faserverstärkte Verbundwerkstoffe und zur Oberflächenbehandlung von z.B. Pigmenten und Füllstoffen in Lacken.
Es hat nicht an Anstrengungen gefehlt, die Eigenschaftsprofile von Alkoxysilanverbindungen durch chemische Modifizierungen zu verbessern, um noch weitere Anwendungsgebiete für diese bedeutsame Produktklasse zu erschließen. So ist aus der Literatur bekannt, das Eigenschaftsprofil von Alkoxylierungsprodukten (Polyethern) mit denen von vernetzbaren, speziell Alkoxysilylgruppen tragenden Verbindungen zu kombinieren. So stellt die DE 69831518 T2 u.a. auf die Modifizierung von Polyetheralkoholen mit z.B. Isocyanatgruppen tragenden Alkoxysilanen unter urethanisierender Verknüpfung ab. Des Weiteren wird zur Alkoxysilyl-Modifizierung auch die hydrosilylierende Anbindung von Alkoxymonohydridosilanen an zuvor mit olefinisch ungesättigten Endgruppen modifizierten Polyetherolen gewählt.
Die JP 11021463 stellt auf ein Verfahren zur Herstellung trialkoxysilylterminierter Polyoxyalkylenether ab, die sich von Glycerin als trifunktionellem Alkohol herleiten, indem die jeweiligen Glycerinpolyethertriole mit Isocyanatgruppen tragenden Trialkoxysilanen unter urethanisierender Verknüpfung modifiziert werden.
Die Patentschrift JP 08295805 beansprucht ein im Wesen vergleichbares Verfahren, das die Trialkoxysilylmodifizierung von via DMC-Katalyse hergestellten Dipropylenglycolpolyetherdiolen mit Isocyanatgruppen tragenden Trialkoxysilanen umfasst.
Die Schriften JP 09012863, JP 09012861 und JP 07062222 beanspruchen ein Verfahren zur Herstellung von ausschließlich terminal mit hydrolysierbaren Trialkoxysilylfunktionen ausgerüsteten Polyetherolen, z.B. Glycerinpolyetherolen, die zunächst via DMC-Katalyse hergestellt, dann durch Zugabe von Alkalialkoholat und Allylchlorid in die entsprechenden Allylether und anschließend durch Platinmetall katalysierte Hydrosilylierung zu den Alkoxysilyl-terminierten Zielprodukten umgesetzt werden.
Alle im Stand der Technik beschriebenen Verfahren eignen sich somit nur zur Herstellung von ausschließlich terminal mit Trialkoxysilylgruppen modifizierten Polyoxyalkylenverbindungen und keinesfalls zur einfachen und/oder mehrfachen Modifizierung von Polyetherketten mit Trialkoxyfunktionen auch innerhalb der Sequenz von Oxyalkyleneinheiten.

Aufgabe der vorliegenden Erfindung ist es daher, den geschilderten Mangel des Standes der Technik zu überwinden und sowohl neue Polyetherstrukturen mit Alkoxysilanfunktionen innerhalb der Sequenz der Oxyalkyleneinheiten der Polyetherkette, als auch neue multialkoxysilyl-terminierte Polyetherstrukturen bereitzustellen, sowie eine neue Alkoxylierungsreaktion zur Herstellung dieser Polyether.

Im Rahmen dieser Anmeldung werden die erfindungsgemäßen Produkte als Polyether oder Polyetherole und/oder deren Derivate bezeichnet, auch wenn das Verfahren Substanzen, bedingt durch die möglichen Reaktionspartner, mit vielfältiger Funktionalität liefert. Allen Produkten ist jedoch gemein, dass eine endständige OH-Gruppe gebildet wird.

Erstaunlicherweise wurde nun gefunden, dass man Epoxidfunktionen tragende Alkoxysilane in vorteilhafter und einfacher Weise in Gegenwart bekannter Doppelmetallcyanidkatalysatoren, auch als DMC-Katalysatoren bekannt, selektiv alkoxylieren kann, ohne dass unter den Reaktionsbedingungen die für diese Stoffgruppe charakteristische Neigung zu unerwünschten Nebenreaktionen (Kondensations- und Vernetzungsreaktionen) beobachtet wird.
Mit dem erfindungsgemäß beanspruchten Verfahren erschließt sich erstmals die Möglichkeit, in sehr einfacher und reproduzierbarer Weise die ein- und/oder mehrfache Alkoxysilylgruppen-Modifizierung von Polyoxyalkylenverbindungen nicht nur terminal, sondern auch innerhalb der Sequenz von Oxyalkyleneinheiten vorzunehmen. Ausgehend von einem Starter mit reaktivem Wasserstoff ist selbst die alkoxylierende Homopolymerisation von Epoxidgruppen tragenden Alkoxysilanen möglich.
Das erfindungsgemäß beanspruchte Verfahren gewährt die synthetische Freiheit, zwischen Alkoxysilylgruppen aufweisenden Polyoxyalkylenverbindungen zu wählen, die die hydrolysierend vernetzbaren Alkoxysilylfunktionen sowohl terminal, als auch isoliert, blockartig kumuliert als aber auch statistisch eingestreut in die Polyoxyalkylenkette enthalten.

Bei den Methoden des Standes der Technik können nur Silylgruppen-terminierte Präpolymere gebildet werden.
Die erfindungsgemäß hergestellten Verbindungen unterscheiden sich von nach klassischen Methoden modifizierten Oligomeren oder Polymeren darin, dass durch den gezielten Kettenaufbau und die variable Insertion von funktionellen Gruppen in blockartiger aber auch isolierter Weise Strukturen gebildet werden, die sowohl eine Silyl-Funktionalisierung verstreut oder blockartig verteilt über die gesamte Kette aufweisen und zudem zusätzlich aber nicht zwingend erforderlich auch an den Termini eine Silylfunktionalisierung tragen können.

Untrennbar mit dem erfindungsgemäßen Verfahren der Alkoxylierung von expoxyfunktionellen Alkoxysilanen verbunden, ist die Besonderheit, dass an den Termini immer eine (sekundäre) OH-Funktionalität vorhanden ist, hervorgegangen aus der Epoxidringöffnung des jeweils letzten Epoxidmonomers an das OH-funktionelle Ende der wachsenden Kette. Eine Verkappung dieser endständigen OH-Gruppe findet somit anders als bei den bisher bekannten Verfahren zur Herstellung silylterminierter Präpolymerer nicht statt.
In den durch direkte Alkoxylierung gewonnenen Produkten ist jede -O-(CH₂)_{c}-Si(R)_{b}(OR)ₐ -Gruppe stets über eine zwischengeschaltete alpha-ständige Oxypropylenfunktionalität in das gebildete Präpolymer integriert ("Spacergruppe"). **Die Oxypropylenfunktionalität rührt aus dem ringgeöffneten** epoxyfunktionellen Alkoxysilans her, der bei der DMC-Reaktion addiert wird.
Dies unterscheidet die erfindungsgemäßen Produkte daher prinzipiell von den nach dem Stand der Technik erhältlichen Präpolymeren, in denen diese -O-(CH₂)_{c}-Si(R)_{b}(OR)ₐ -Gruppe unmittelbar an das Polymer gebunden ist, ohne das Vorhandensein einer Spacergruppe.
So ermöglicht das erfindungsgemäße Verfahren den Aufbau nicht-klassischer, aus dem Stand der Technik so nicht ableitbarer Präpolymersysteme, deren Vernetzung zu Polymerisaten führt, die somit ebenfalls einen nichtklassischen Aufbau widerspiegeln. Ein einfacher Einschub eines alkoxysilylgruppenfreien Polymerfragments zwischen die erfindungsgemäßen erhaltenen Ketten- und/oder Termini-Funktionalisierungen und einen nicht näher spezifizierten, langläufig bekannten, Polymerrest kann somit in keinem Fall zu den erfindungsgegenständlichen Präpolymeren führen.

Dem Unterschied der erfindungsgemäß hergestellten Verbindungen/Prepolymere Rechnung tragend, wird im Rahmen dieser Anmeldung der Begriff "modifiziertes Polymer" oder "modifizierte Polymerkette" verwendet, während für klassische Polymere, die in ihrem Aufbau die blockartige oder statistische Verteilung von Monomereinheiten aufweisen nur der Begriff "Polymer" verwendet wird.

Als Epoxidgruppen enthaltende Alkoxysilylverbindungen (I) werden nach dem erfindungsgemäßen Verfahren Verbindungen des allgemeinen Typs: 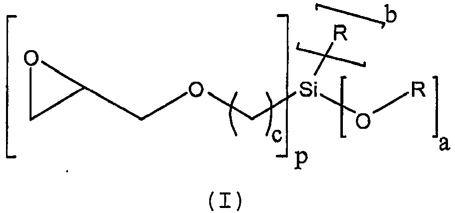 eingesetzt, wobei
- R: einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen, und insbesondere Ethyl- oder Methylgruppen und wobei
- a: eine ganze Zahl von 1 bis 3, vorzugsweise 3 ist,
- b: eine ganze Zahl von 0 bis 2, vorzugsweise 0 bis 1, besonders bevorzugt 0 ist, die Summe von a und b gleich 3 ist,
- c: eine ganze Zahl von 0 bis 24, vorzugsweise von 0 bis 12, besonders bevorzugt von 0 bis 8, ganz besonders bevorzugt von 0 bis 4 ist,
und p eine ganze Zahl ist, die der Differenz aus 4-a-b entspricht.

Die für das erfindungsgemäß beanspruchte Verfahren eingesetzten Doppelmetallcyanidkatalysatoren (DMC-Katalysatoren) sind in ihrer Herstellung und Verwendung als Alkoxylierungskatalysatoren seit den 1960er Jahren bekannt und werden zum Beispiel in US 3,427,256, US 3,427,334, US 3,427,335, US 3,278,457, US 3,278,458 oder US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Auf die hohe Selektivität der DMC-katalysierten Alkoxylierung ist zurückzuführen, dass zum Beispiel Propylenoxidbasierende Polyether nur sehr geringe Anteile ungesättigter Nebenprodukte enthalten.

Der Stand der Technik referiert verschiedene Alkoxylierungsverfahren, die sich der Katalyse mit Doppelmetallcyanid-Katalysatoren bedienen. Als Referenz sei hier z. B. auf EP-A-1017738, US 5,777,177, EP-A-0981407, WO 2006/002807 und EP-A-1474464 verwiesen.

Überraschenderweise wurde gefunden, dass nicht nur konventionelle Alkylenoxide wie Ethylenoxid, Propylenoxid und 1,2-Butylenoxid, sondern auch die für ihre Hydrolyseempfindlichkeit bekannten epoxidfunktionellen Alkoxysilane wie 3-Glycidyloxypropyltrimethoxysilan oder 3-Glycidyloxypropyltrieethoxysilan in Gegenwart von DMC-Katalysatoren auf einfache Weise alkoxyliert werden können. Die Polymerisation solcher substituierter Silanverbindungen geschieht unter den Bedingungen der DMC-Katalyse quantitativ, selektiv und so schonend, dass sich mit dem erfindungsgemäßen Verfahren die Möglichkeit erschließt, eine neue erfindungsgemäße Produktklasse von ein- und mehrfach Alkoxysilyl-modifizierten Polyoxyalkylenverbindungen unter Erhalt der hydrolyseempfindlichen und vernetzbaren Alkoxysilylgruppen herzustellen.
Es wird somit ein Verfahren zur Herstellung von vernetzbaren Alkoxysilylgruppen aufweisenden Polyetheralkoholen mittels DMC-Katalyse zur Verfügung gestellt, bei dem ein oder mehrere epoxidfunktionelle Alkoxysilane gemäß Formel (I) einzeln oder im Gemisch mit weiteren Epoxidverbindungen der Formeln (II) oder (III) und gegebenenfalls weiteren Comonomeren wie Lactonen (IV), cyclischen Anhydriden (V), (VI), Kohlendioxid oder Oxetanen wahlweise blockartig oder statistisch an einen Kettenstarter der Formel (VII) mit mindestens einem reaktivem Wasserstoff addiert werden. Die mindestens eine Epoxidgruppe tragenden Alkoxysilanmonomere können dabei beliebig in die modifizierte Polymerkette eingestreut werden als auch kettenendständig im modifizierten Polymergerüst angeordnet sein.
Weiteres Ziel des erfindungsgemäßen Verfahrens ist es, die von den Doppelmetallcyanid-Systemen bekannten Vorteile einer hohen Reaktionsgeschwindigkeit und des Verzichts auf die Katalysatordeaktivierung und -abtrennung zu erhalten.

Darüber hinaus ist es das Ziel des erfindungsgemäßen Verfahrens, die hydrolyseempfindlichen Alkoxysilylgruppen unter den Reaktionsbedingungen der selektiven DMC-katalysierten Alkoxylierung zu konservieren und somit einen Zugang zu einer neuen, ebenfalls erfindungsgemäßen Klasse von vernetzbaren Polyethern bzw. organisch modifizierten Alkoxysilanverbindungen zu schaffen.

Gegenstand der Erfindungs ist somit ein Verfahren zur Herstellung von Alkoxysilylgruppen aufweisenden Polyetheralkoholen mittels DMC-Katalyse, indem ein oder mehrere epoxidfunktionelle Alkoxysilane einzeln oder im Gemisch mit weiteren Epoxidverbindungen und gegebenenfalls weiteren Comonomeren wahlweise blockartig oder statistisch verteilt an einen Kettenstarter der Formel (VII)

R¹-H (VII)

mit mindestens einer reaktiven Hydroxylgruppe addiert werden, wobei R¹ einem gesättigten oder ungesättigten, gegebenenfalls verzweigten Rest, oder einen Polyetherrest vom Typ einer Alkoxy-, Arylalkoxy- oder Alkylarylalkoxygruppe darstellt, bei dem die Kohlenstoffkette durch Sauerstoffatome unterbrochen sein kann oder einem Polyetheralkoxyrest oder einer einfach oder mehrfach annelierten phenolischen Gruppe entspricht.

Die erfindungsgemäß als epoxidfunktionelle Alkoxysilane verwendeten Siliziumverbindungen sind Verbindungen der allgemeinen Formel (I) 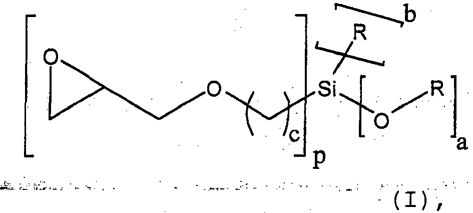 wobei
- R: einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen ;
- a: eine ganze Zahl von 1 bis 3, vorzugweise 3 ist,
- b: eine ganze Zahl von 0 bis 2, vorzugsweise 0 bis 1, besonders bevorzugt 0 ist, die Summe von a und b gleich 3 ist,
- c: eine ganze Zahl von 0 bis 24, vorzugsweise von 0 bis 12, besonders bevorzugt von 0 bis 8, ganz besonders bevorzugt von 0 bis 4 und insbesondere gleich 1 oder 3 ist,
und p eine ganze Zahl ist, die der Differenz aus 4-a-b entspricht.

Eine nicht abschließende Sammlung solcher Epoxidgruppensubstituierter Alkoxysilane gemäß der Formel (I), die allein oder in Mischungen miteinander oder in Kombination mit Epoxidverbindungen der Formeln (II) und (III) verwendet werden können, umfasst zum Beispiel 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyl-dimethoxysilan, 3-Glycidyloxypropyl-ethyl-diethoxysilan.

Die epoxidfunktionellen Alkoxysilane gemäß Formel (I) können bei der DMC-katalysierten Alkoxylierung zur Herstellung vernetzbarer Polyether nach erfindungsgemäßem Verfahren bei Bedarf in beliebiger Dosierreihenfolge nacheinander oder im Gemisch mit Alkylenoxiden der allgemeinen Formel (II) eingesetzt werden, 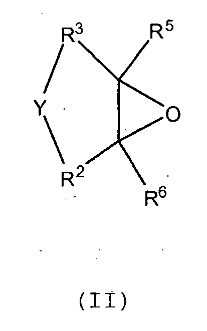 mit R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste in Formel (II) R² oder R³ Wasserstoff. Besonders bevorzugt werden als Alkylenoxide Ethylenoxid, Propylenoxid, 1,2-oder 2,3-Butylenoxid, Isobutylenoxid, 1,2-Dodecenoxid, Styroloxid, Cyclohexenoxid (hier ist R²-R³ eine - CH₂CH₂CH₂CH₂-Gruppe, Y damit -CH₂CH₂-) oder Vinylcyclohexenoxid oder deren Mischungen eingesetzt. Die Kohlenwasserstoffreste R² und R³ gemäß Formel (II) können ihrerseits weiter substituiert sein und funktionelle Gruppen wie Halogene, Hydroxylgruppen oder Glycidyloxypropylgruppen tragen. Zu solchen Alkylenoxiden gehören Epichlorhydrin und 2,3-Epoxy-1-propanol.

Ebenfalls können Glycidylverbindungen wie Glycidylether und/oder Glycidylester der allgemeinen Formel (III), 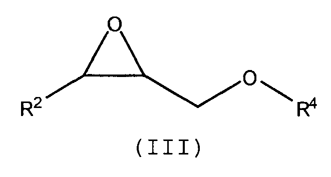 bei denen mindestens eine Glycidyloxypropyl-Gruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist, in Kombination mit den in Formel (I) dargestellten epoxidfunktionellen Alkoxysilanen und gegebenenfalls zusätzlich zu den Alkylenoxiden der Formel (II) verwendet werden; R² besitzt die gleiche Bedeutung wie sie unter Formel (II) angegeben ist. Zu dieser Klasse von Verbindungen gehören zum Beispiel Allyl-, Butyl-, 2-Ethylhexyl-, Cyclohexyl-, Benzyl-, C₁₂/C₁₄-Fettalkohol-, Phenyl-, p-tert.-Butylphenyl- oder o-Kresylglycidylether. Bevorzugt eingesetzte Glycidylester sind zum Beispiel Glycidylmethacrylat, Glycidylacrylat oder Neodecansäureglycidylester. Ebenso einsetzbar sind polyfunktionelle Epoxidverbindungen wie zum Beispiel 1,2-Ethyl-, 1,4-Butyl- oder 1,6-Hexyldiglycidylether.

Die erfindungsgemäß einsetzbaren Epoxidgruppen tragenden Alkoxysilane der Formel (I) können - gegebenenfalls in Kombination mit weiteren Epoxiden gemäß Formel (II) und (III) - unter den Bedingungen der DMC-katalysierten Alkoxylierung auch im Gemisch mit Lactonen der Formel (IV), 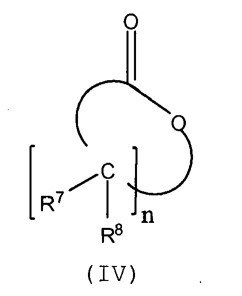 wobei n eine ganze Zahl von 2 bis 8 ist und R⁷ und R⁸ unabhängig voneinander entweder Wasserstoff, Alkyl-, Alkoxy-, Aryl- oder Aralkylgruppen darstellen, unter Ringöffnungspolymerisation zu vernetzbaren, Alkoxysilangruppen enthaltenden Polyetherestern copolymerisiert werden. Als geeignete Lactone können in dem Zusammenhang beispielsweise ε-Caprolacton, δ-Valerolacton und γ -Butyrolacton sowie Gemische verschiedener Lactone verwendet werden. Bevorzugt ist die Verwendung von ε-Caprolacton als Comonomer. Während des Alkoxylierungsprozesses können die jeweiligen Epoxid- und Lactonmonomere in beliebiger Reihenfolge und variabler Menge nacheinander oder zeitlich parallel zu Polyetherestern mit blockartiger oder statistisch verteilter Sequenz der einzelnen Monomerbausteine copolymerisiert werden.

Alternativ oder zusätzlich zu Lactonen können auch gesättigte, ungesättigte oder aromatische cyclische Dicarbonsäureanhydride gemäß den Formeln (V) und (VI) als Comonomere neben den erfindungsgemäß einsetzbaren Epoxidgruppen tragenden Alkoxysilanen der Formel (I) und gegebenenfalls weiteren Epoxiden gemäß Formel (II) und (III) unter den Bedingungen der DMC-katalysierten Alkoxylierung eingesetzt werden, 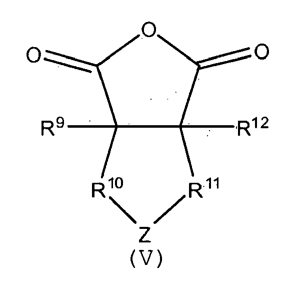 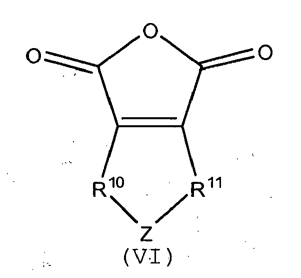 wobei R⁹, R¹⁰, R¹¹ und R¹² unabhängig voneinander entweder Wasserstoff, Alkyl-, Alkenyl-, Alkoxy-, Aryl- oder Aralkylgruppen darstellen. Der Kohlenwasserstoffrest kann cycloaliphatisch oder aromatisch über das Fragment Z verbrückt sein, wobei Z sowohl einen divalenten Alkylenals auch Alkenylenrest darstellen kann. Bevorzugt eingesetzte cyclische Anhydride sind Bernsteinsäureanhydrid, Oct(en)yl-, Dec(en)yl- und Dodec (en) ylbernsteinsäueanhydrid, Maleinsäureanhydrid, Phthalsäureanhydrid, Hexahydro-, Tetrahydro-, Dihydro-, Methylhexahydro- und Methyltetrahydrophthalsäureanhydrid. Während des Alkoxylierungsprozesses können die jeweiligen Anhydridmonomere in beliebiger Reihenfolge und variabler Menge nacheinander oder zeitlich parallel zum Epoxidfeed unter Ringöffnung zu Polyetherestern copolymerisiert werden. Auch Mischungen von Anhydriden gemäß Formel (V) und (VI) sind einsetzbar.

Ein weiterer Gegenstand der Erfindung ist damit das Verfahren zur Herstellung von vernetzbaren Alkoxysilylgruppen aufweisenden Polyetheralkoholen mittels bekannter Doppelmetallcyanidkatalysatoren, dadurch gekennzeichnet, dass ein oder mehrere epoxidfunktionelle Alkoxysilane gemäß Formel (I) 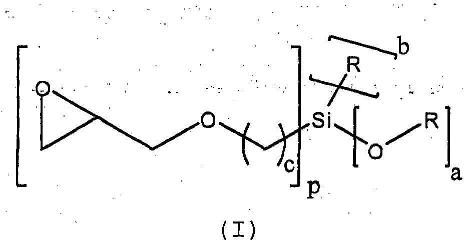 einzeln oder im Gemisch mit weiteren Epoxidverbindungen der Formeln (II) 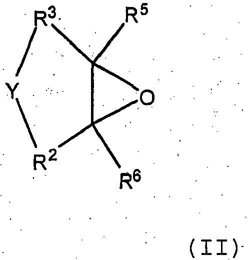 und/oder (III) 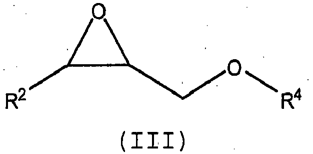 und/oder gegebenenfalls weiteren Comonomeren wie Lactonen (IV), 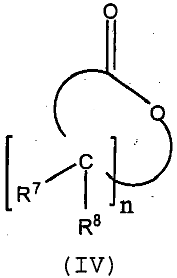 und/oder cyclischen Anhydriden (V), (VI), 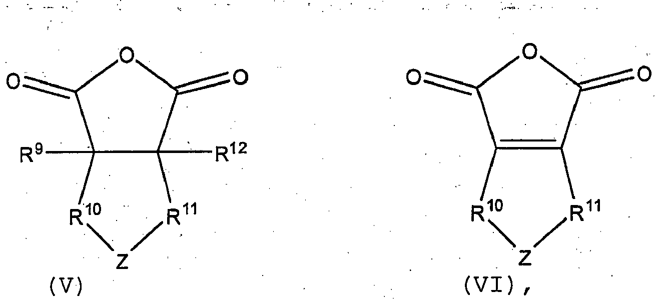 und/oder Kohlendioxid und/oder Oxetanen, wahlweise blockartig oder statistisch verteilt an einen Kettenstarter der Formel (VII)

R¹-H (VII)

mit mindestens einem reaktivem Wasserstoff addiert werden, wobei
R einem oder mehreren gleichen oder verschiedenen Resten, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen entspricht und
a eine ganze Zahl von 1 bis 3,
b eine ganze Zahl von 0 bis 2,
   die Summe von a und b gleich 3 ist,
c eine ganze Zahl von 0 bis 24 und
p eine ganze Zahl ist, die der Differenz aus 4-a-b entspricht,
R¹ einem gesättigten oder ungesättigten, gegebenenfalls verzweigten Rest, einem Polyetherrest vom Typ einer Alkoxy-, Arylalkoxy- oder Alkylarylalkoxygruppe, bei der die Kohlenstoffkette durch Sauerstoffatome unterbrochen sein kann, einen Polyetheralkoxyrest oder einer einfach oder mehrfach annelierten phenolischen Gruppe entspricht, R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest ist, wobei für die Reste R⁵ oder R⁶ gilt, dass sie gleich einem einwertigen Kohlenwasserstoffrest sind und der Kohlenwasserstoffrest cycloaliphatisch über das Fragment Y verbrückt sein kann, wobei
Y nicht vorhanden sein kann, oder aber eine Methylenbrücke mit 1 oder 2 Methyleneinheiten ist, mit der Maßgabe, dass bei nicht vorhandenem Y die Reste R² oder R³ unabhängig voneinander gleich einem linearen oder verzweigten Rest mit 1 bis 20 Kohlenstoffatomen sind,
R⁴ eine Glycidyloxypropyl-Gruppe ist, die über eine Ether- oder Esterfunktion an einen linearen oder verzweigten Alkylrest von 1 bis 24 Kohlenstoffatomen oder über einen aromatischen oder cycloaliphatischen Rest gebunden ist,
n eine ganze Zahl von 2 bis 8 ist und R⁷ und R⁸ unabhängig voneinander entweder Wasserstoff, Alkyl-, Alkoxy-, Aryl- oder Aralkylgruppen darstellen, und
R⁹, R¹⁰, R¹¹ und R¹² unabhängig voneinander entweder Wasserstoff, Alkyl-, Alkenyl-, Alkoxy-, Aryl- oder Aralkylgruppen darstellen, wobei der Alkylrest oder Alkenylrest cycloaliphatisch oder aromatisch über das Fragment Z verbrückt sein kann, wobei Z sowohl einen divalenten Alkylen- als auch Alkenylenrest darstellen kann.

Wird die Alkoxylierung von epoxidfunktionellen Alkoxysilanen - gegebenenfalls in Anwesenheit von weiteren Epoxidverbindungen des Typs (II) oder (III) oder Comonomeren gemäß (V) und (VI) - in Gegenwart von Kohlendioxid durchgeführt, gelingt die Herstellung carbonatgruppen-modifizierter Polyether bzw. Polyetherester durch Insertion von Kohlendioxid in die modifizierte Polymerkette. Solche Umsetzungen finden bevorzugt in Autoklavreaktoren unter Überdruck und Kohlendioxidatmosphäre statt. Der Carbonatgehalt ist variabel und z.B. durch die Wahl der Temperatur- und Druckbedingungen während der Umsetzung steuerbar.

Als Starter oder Startverbindungen für die Alkoxylierungsreaktion können alle Verbindungen der Formel (VII)

R¹-H (VII)

(das H gehört zur OH-Gruppe eines Alkohols oder einer phenolischen Verbindung) allein oder in Mischungen miteinander eingesetzt werden, die gemäß Formel (VII) mindestens eine reaktive Hydroxylgruppe aufweisen. R¹ entspricht einem gesättigten oder ungesättigten, gegebenenfalls verzweigten Rest, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine einfach oder mehrfach annelierte aromatische Gruppe, an die eine phenolische OH-Gruppe direkt gebunden ist. Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Unter Startverbindungen werden im Rahmen der vorliegenden Erfindung Substanzen verstanden, die den Anfang (Start) des herzustellenden Polyethermoleküls bilden, das durch die erfindungsgemäße Anlagerung von epoxidfunktionellen Monomeren der Formeln (I), (II) und (III) und evtl. weiteren Comonomeren der Formeln (IV), (V) und (VI) erhalten wird. Die in dem erfindungsgemäßen Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols oder Phenols) eingesetzt.
Als OH-funktionelle Startverbindungen R¹-H (VII) werden vorzugsweise Verbindungen mit Molmassen von 18 bis 10.000 g/mol, insbesondere 50 bis 2000 g/mol und mit 1 bis 8, bevorzugt mit 1 bis 4 Hydroxylgruppen eingesetzt.

Beispielhaft für Verbindungen der Formel (VII) seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, Poly-THF, OH-funktionelle Polyolefine wie OH-funktionelles Polybutadien, 1,4-Butandiol, 1,6-Hexandiol, 1,4-Butindiol, Tetramethyldecindiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt.

Vorteilhaft werden niedermolekulare Polyetherole mit 1-8 Hydroxylgruppen und Molmassen von 50 bis 2000 g/mol, die ihrerseits zuvor durch DMC-katalysierte Alkoxylierung hergestellt wurden, als Starterverbindungen verwendet.
Neben Verbindungen mit aliphatischen und cycloaliphatischen OH-Gruppen eignen sich beliebige Verbindungen mit 1-20 phenolischen OH-Funktionen. Hierzu gehören beispielspweise Phenol, Alkyl- und Arylphenole, Bisphenol A und Novolake.

Zum Starten der Alkoxylierungsreaktion nach erfindungsgemäßem Verfahren wird das Startgemisch, bestehend aus einem oder mehreren OH-funktionellen Startverbindungen der Formel (VII) und dem Doppelmetallcyanid-Katalysator, der gegebenenfalls zuvor in einem Suspendiermittel aufgeschlämmt wurde, im Reaktor vorgelegt. Als Suspensionsmittel können entweder ein Polyether oder inerte Lösungsmittel benutzt werden oder vorteilhaft auch eine oder mehrere Startverbindungen gemäß Formel (VII), oder alternativ ein Gemisch aus beiden Komponenten. Der vorgelegten Startmischung wird zumindest eine der Epoxidverbindungen gemäß Formel (I), (II) oder (III) zudosiert. Zum Starten der Alkoxylierungsreaktion und zur Aktivierung des Doppelmetallcyanid-Katalysators wird zunächst meist nur ein Teil der insgesamt zu dosierenden Menge an Epoxid zugefügt. Das molare Verhältnis von Epoxid zu den reaktiven Gruppen des Starters, insbesondere den OH-Gruppen im Startgemisch, liegt in der Startphase dabei vorzugsweise bei 0,1 bis 10 zu 1, bevorzugt bei 0,2 bis 5 zu 1, insbesondere bei 0,4 bis 3 zu 1. Es kann vorteilhaft sein, wenn vor der Zugabe des Epoxids gegebenenfalls vorhandene, die Reaktion inhibierende Stoffe aus dem Reaktionsgemisch z.B. durch Destillation entfernt werden.

Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist. Bei nicht gasförmigen Glycidylethern/-estern oder epoxidfunktionellen Alkoxysilanen wird das Anspringen der Reaktion durch die einsetzende Wärmetönung angezeigt.

Ein weiterer Gegenstand der Erfindung ist daher auch ein Verfahren bei dem die Dosierung der Epoxidkomponenten, Lactone, cyclischen Anhydride der Formeln (I) bis (VI) allein oder in Mischung miteinander in beliebiger Reihenfolge und variabler Menge nacheinander oder zeitlich parallel zueinander oder auch jeweils nacheinander alternierend erfolgt.

Nach der Startphase, also nach Initialisierung der Reaktion, werden je nach angestrebter Molmasse entweder gleichzeitig weitere Startverbindung und weiteres Epoxid oder nur weiteres Epoxid zudosiert. Alternativ kann auch ein beliebiges Gemisch von unterschiedlichen Epoxiden der Formeln (I), (II) und (III) addiert werden. Die erfindungsgemäß einsetzbaren Epoxidmonomere gemäß den Formeln (I), (II) oder- (III) können auch in beliebige Reihenfolge nacheinander addiert werden. Die Umsetzung kann z.B. zwecks Viskositätserniedrigung des Reaktionsgemisches in einem inerten Lösemittel durchgeführt werden. Als inerte Lösungsmittel eignen sich Kohlenwasserstoffe, insbesondere Toluol, Xylol oder Cyclohexan.

In den erfindungsgemäßen Produkten beträgt das molare Verhältnis der Summe der dosierten Epoxide, inklusive der bereits in der Startphase zugefügten Epoxide, bezogen auf die eingesetzte Startverbindung, insbesondere bezogen auf die Anzahl der OH-Gruppen der eingesetzten Startverbindung, dabei vorzugsweise 1 bis 10⁵ zu 1, insbesondere 1 bis 10⁴ zu 1.

Die Anlagerung der Epoxidverbindungen geschieht vorzugsweise bei einer Temperatur von 60 bis 250 °C, besonders bevorzugt bei einer Temperatur von 90 bis 160 °C. Der Druck, bei dem die Alkoxylierung stattfindet, beträgt vorzugsweise 0,02 bar bis 100 bar, besonders bevorzugt 0,05 bis 20 bar und insbesondere von 0,2 bis 2 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) oder - zur Herstellung von Polyethercarbonaten - in Gegenwart von Kohlendioxid auch bei einem Überdruck von dann vorzugsweise 1 bis 20 bar absolut durchgeführt werden.

Die für die Herstellung von estermodifizierten Polyethern einsetzbaren Lactone (IV) oder cyclischen Anhydride (V) und (VI) können sowohl bereits in der Startphase dem Starter-Katalysator-Gemisch zugefügt als auch zu einem späteren Zeitpunkt parallel zur Epoxiddosierung zugeführt werden. Die genannten Comonomere können auch jeweils nacheinander alternierend mit Epoxiden in den Reaktor dosiert werden.
Das molare Verhältnis der Epoxidmonomere zu cyclischen Anhydriden ist dabei variabel. Üblicherweise werden mindenstens äquimolare Mengen Epoxidmonomere bezogen auf Anhydride eingesetzt. Bevorzugt ist die Verwendung der Epoxide in einem molaren Überschuss, um die vollständige Anhydridumsetzung zu gewährleisten.
Lactone können während der Alkoxylierung wahlweise im stöchiometrischen Unterschuss oder Überschuss bezogen auf die Epoxidmonomere zugefügt werden.

Zur Herstellung von carbonatmodifizierten Polyethern findet die Alkoxylierung in Gegenwart von entweder gasförmig oder als Trockeneis zugeführtem festen Kohlendioxid statt. Vorzugsweise wird Kohlendioxidgas verwendet, das sowohl bereits vor dem Start der Reaktion, also bereits während der Initialisierungsstufe, dem System aus Starter und DMC-Katalysator zugeführt werden kann, als auch während der nachfolgenden Phase des Zulaufs von Epoxidmonomeren und evtl. weiterer Comonomere. Um den Carbonatgehalt im Endprodukt zu erhöhen, ist es vorteilhaft, entsprechend dem Kohlendioxidverbrauch, erkennbar an der Druckabnahme im Autoklaven, im Verlaufe der Umsetzung weiteres Kohlendioxid kontinuierlich oder portionsweise zuzudosieren. Vorzugsweise geschieht die Reaktion bei Drücken von weniger als 100 bar, besonders bevorzugt bei weniger als 20 bar.

Ein weiterer Gegenstand der Erfindung ist auch ein Verfahren bei dem die Alkoxylierung der epoxidfunktionellen Alkoxysilane (I), gegebenenfalls in Anwesenheit von weiteren Epoxidverbindungen der Formeln (II) oder (III) und/oder Comonomeren gemäß den Formeln (IV), (V) und/oder (VI) in Gegenwart von Kohlendioxid durchgeführt wird.

Ein weiterer Gegenstand der Erfindung ist auch ein Verfahren bei dem carbonatgruppen-modifizierte Polyether bzw. Polyetherester durch Insertion von Kohlendioxid in die modifizierte Polymerkette hergestellt werden.

Nach der Monomer-Addition und eventueller Nachreaktion zur Vervollständigung des Monomerumsatzes werden evtl. vorhandene Reste von nicht abreagiertem Monomer und eventuell weiteren leicht flüchtigen Bestandteilen, üblicherweise durch Vakuumdestillation, Gasstrippen oder andere Methoden der Desodorierung entfernt. Die Entfernung leichtflüchtiger Nebenkomponenten kann sowohl batchweise als auch kontinuierlich erfolgen. Beim erfindungsgemäßen Verfahren auf Basis der DMC-Katalyse kann im Normalfall auf eine Filtration verzichtet werden.

Die Verfahrensschritte können bei identischen oder verschiedenen Temperaturen ausgeführt werden. Die im Reaktor zum Reaktionsstart vorgelegte Mischung aus Startsubstanz, DMC-Katalysator und gegebenenfalls Suspensionsmittel kann vor Beginn der Monomerdosierung gemäß der Lehre von WO 98/52689 durch Strippen vorbehandelt werden. Dabei wird über die Reaktorzuführung ein Inertgas dem Reaktionsgemisch zugemischt und mit Hilfe einer an das Reaktor angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaktanden oder durch Nebenreaktionen auch inhibierende Verbindungen in das Reaktionsgemisch gelangen können.

Als DMC-Katalysator können alle bekannten DMC-Katalysatoren, vorzugsweise solche, die Zink und Kobalt aufweisen, bevorzugt solche, die Zinkhexacyanocobaltat(III) aufweisen, eingesetzt werden. Vorzugsweise werden die in US 5,158,922, US 20030119663, WO 01/80994 oder in den oben genannten Schriften beschriebenen DMC-Katalysatoren eingesetzt. Die Katalysatoren können amorph oder kristallin sein.
Im Reaktionsgemisch liegt die Katalysatorkonzentration vorzugsweise bei > 0 bis 1.000 wppm (Massen-ppm), bevorzugt bei > 0 bis 500 wppm, besonders bevorzugt bei 0,1 bis 200 wppm und ganz besonders bevorzugt bei 1 bis 50 wppm. Diese Konzentration ist dabei bezogen auf die Gesamtmasse der entstehenden Polyetherpolyole.
Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter der Formel VII als Suspensionsmittel. Bevorzugt wird aber auf eine Suspendierung verzichtet.

Durch das erfindungsgemäße Verfahren werden Polyether bereitgestellt, die sich dadurch auszeichnen, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere des Typs (I), (II) und (III) und Lactone nach Formel (IV) können beliebig block**artig aneinander gereiht oder statistisch in die** modifizierte Polymerkette eingebaut sein. Die durch die Reaktion unter Ringöffnung der Reaktionskomponenten der Formeln (I) bis (VI) in die entstehende modifizierte Polymerkette eingefügten Fragmente sind in ihrer Sequenz untereinander frei permutierbar, mit der Einschränkung, dass cyclische Anhydride nach Formel (V) und (VI) sowie Kohlendioxid statistisch insertiert, also nicht in homologen Blöcken, in der Polyetherstruktur vorliegen.
Ist p in Formel (I) größer als 1, werden durch das erfindungsgemäße Verfahren hochfunktionalisierte Netzwerke gebildet, bei denen Polyetherketten, die jeweils von R¹ gestartet sind und die in ihrer Abfolge die frei permutierbaren Fragmente enthalten, die durch die Reaktion unter Ringöffnung der Reaktionskomponenten der Formeln (I) bis (VI) in die entstehende modifizierte Polymerkette eingefügt wurden, über -CH₂-O-(CH₂)_{2+c}-Si-(CH₂)_{2+c}-O-CH₂-Brücken miteinander verknüpft sind. Es entstehen also hochkomplexe, hochfunktionalisierte Strukturen. Auch hier **lassen sich die Funktionalitäten gezielt** auf ein gewünschtes Anwendungsgebiet einstellen. Durch die Alkoxylierung von Gemischen aus mono-, di- oder triepoxidfunktionellen Alkoxysilanverbindungen gemäß Formel (I) kann p im Mittel beliebige Werte zwischen 1 und 3 annehmen. Der Vernetzungsgrad und die Komplexität der erhaltenen modifizierten Polymerstrukturen steigt mit zunehmendem Mittelwert von p. Bevorzugt ist eine durch den Index p vorgegebene mittlere Epoxidfunktionalität zwischen 1 und 2. Ganz besonders bevorzugt sind 3-Glycidyloxyalkyltrialkoxysilane mit p gleich 1.

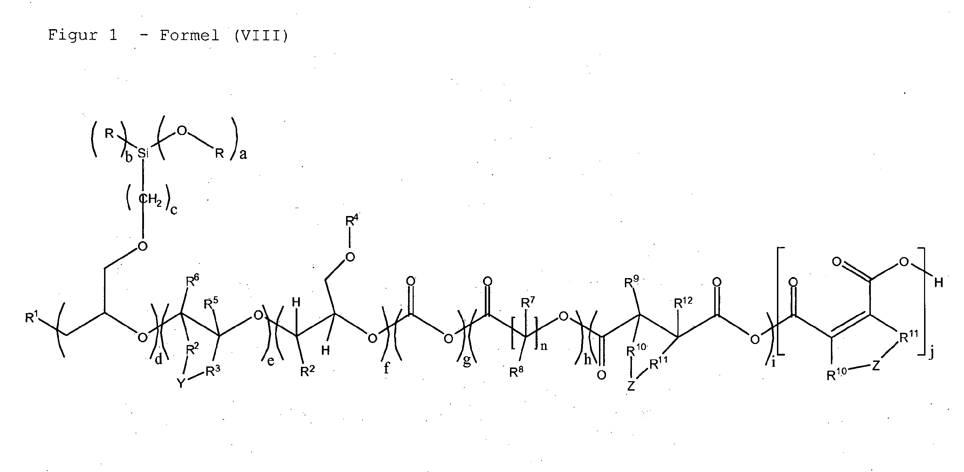

Dabei können die Fragmente, die durch die Reaktion unter Ringöffnung der Reaktionskomponenten der Formeln (I) bis (VI) in die entstehende modifizierte Polymerkette eingefügt wurden, im Rahmen der vorhergehenden Definitionen blockartig oder statistisch verteilt, nicht nur in der Kette einer Polyether-Struktureinheit vorkommen, sondern auch statistisch verteilt über die Vielzahl der gebildeten und über -CH₂-O- (CH₂)_{2+c}-Si-(CH₂)_{2+c}-C-CH₂-Brücken miteinander verbundenen Polyetherstruktureinheiten, vorkommen. Die Mannigfaltigkeit der Strukturvariationen der Verfahrensprodukte gestattet damit keine eindeutige formelmäßige Beschreibung. Bevorzugt werden die erfindungsgemäßen Polyetherstrukturen der Formel (VIII) - siehe auch Figur 1 - hergestellt, wobei die Alkoxylierung von monoepoxidfunktionellen Alkoxysilanen der Formel (I) mit den Indizes p gleich 1 und a gleich 3 erfolgt. Diese bestehen aus Trialkoxysilylgruppen substituierten, linearen Ketten, die durch die Wahl der Fragmente d bis j, entsprechend der durch die Reaktion unter Ringöffnung der Reaktionskomponenten der Formeln (I) bis (VI) in die modifizierte Polymerkette eingefügten Fragmente, gezielt hochfunktionalisiert sind und damit für verschiedenartige Anwendungsgebiete zugeschnitten werden können.

Ein weiterer Gegenstand der Erfindung sind somit Alkoxysilylpolyether der Formel (VIII)

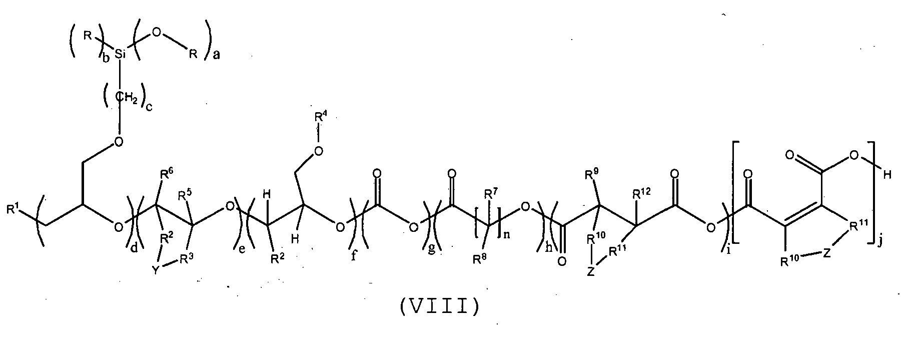

Die Substituenten R, R¹-R¹², die Reste Y und Z sowie die Indizes a, b und c entsprechen den zuvor für die Verbindungen der Formeln (I) bis (VII) genannten Definitionen, wobei
- d: eine ganze Zahl von 1 bis 1.000, bevorzugt 1 bis 100, besonders bevorzugt 4 bis 20 und ganz besonders bevorzugt 5 bis 10 und insbesondere größer als 4 ist,
- e: eine ganze Zahl von 0 bis 10.000, bevorzugt 1 bis 2000, besonders bevorzugt 1 bis 1000 und insbesondere 1 bis 500 ist,
- f: eine ganze Zahl von 0 bis 1.000, bevorzugt 0 bis 100, besonders bevorzugt 0 bis 50 und insbesondere 0 bis 30 ist,
- g: eine ganze Zahl von 0 bis 1.000, bevorzugt 0 bis 200, besonders bevorzugt 0 bis 100 und insbesondere 0 bis 70 ist,
- h, i und j: ganze Zahlen von 0 bis 500, bevorzugt 0 bis 300, besonders bevorzugt 0 bis 200 und insbesondere 0 bis 100 ist, und mit der Maßgabe, dass die Fragmente mit den Indices d bis j untereinander frei permutierbar, d.h. in der Sequenz innerhalb der Polyetherkette gegeneinander austauschbar sind
- n: eine ganze Zahl zwischen 2 und 8 ist; und bevorzugt weiterhin p gleich 1 und a gleich 3 ist.

Die verschiedenen Monomereinheiten sowohl der Fragmente mit den Indexzahlen d bis j als auch der eventuell vorhandenen Polyoxyalkylenkette des Substituenten R¹ können untereinander blockweise aufgebaut sein oder aber auch einer statistischen Verteilung unterliegen.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel VIII.

Mit dem erfindungsgemäßen Verfahren können je nach verwendetem epoxidfunktionellem Alkoxysilan nach Formel (I) und evtl. eingesetzten weiteren Monomeren entsprechend der Formeln (II), (III),(IV), (V) und (VI) sowie evtl. auch Kohlendioxid nach dem erfindungsgemäßen Verfahren ebenfalls erfindungsgemäße Alkoxysilylgruppen-modifizierte Polyetheralkohole hergestellt werden, sowie deren beliebig aufgebaute Gemische.

Einzige bekannte Vertreter der Verbindungen der Formel (VIII) mit ausschließlich terminalen Trialkoxysilylgruppen wurden in der japanischen Patentanmeldung JP 2005-215422 und der europäischen Patentanmeldung EP-A1-0-101027, sowie in "Polymer (Korea)", (2003), Band 27(3), Seiten 265-270 (Titel des Artikels: Properties of polymer electrolytes based on polyethylene oxide/lithium perchlorate (PEO-LiClO₄) matrix fabricated by sol-gel process) beschrieben, jedoch in allen Zitaten nach abweichenden Verfahren, also nicht durch Alkoxylierung von Epoxiden der Formel (I) hergestellt und außerdem ausschließlich beschränkt auf aus den Monomeren Ethylenoxid oder Propylenoxid aufgebaute Polyetherketten mit endständig einfacher Trialkoxysilyl-Funktionalisierung.

Die dort beschriebenen Verbindungen sind: 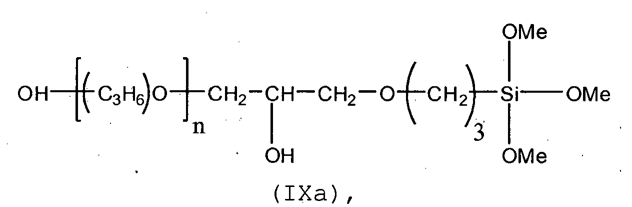 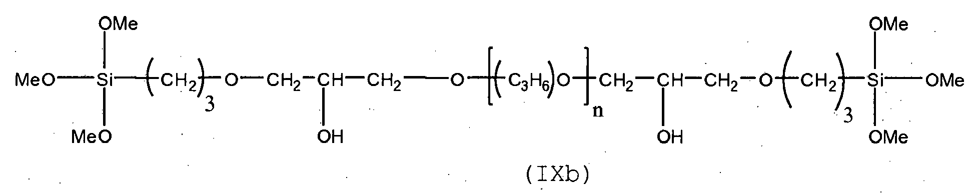 und 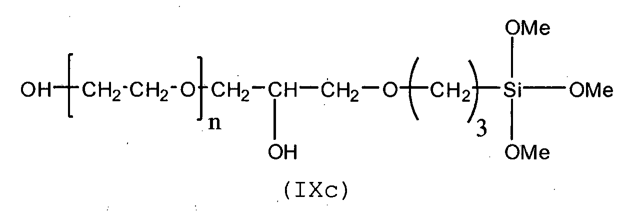 sowie

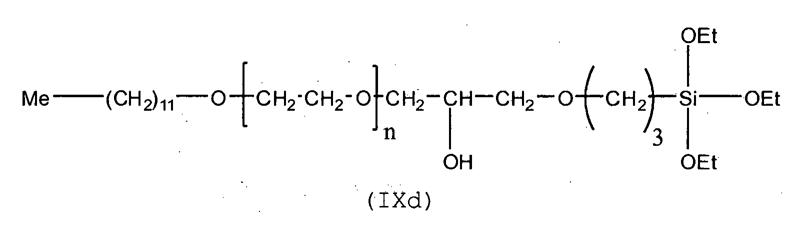

Ein weiterer Gegenstand dieser Erfindung sind somit neue Verbindungen, hergestellt nach dem erfindungsgemäßen Verfahren, mit der proviso, dass die Verbindungen (IXa), (IXb) und (IXc) sowie (IXd) nicht mitumfasst sind. Bevorzugt sind die Verbindungen der Formel (VIII), mit der proviso, dass die Verbindungen (IXa), (IXb) und (IXc) sowie (IXd) nicht mitumfasst sind.

Ein weiterer Gegenstand der Erfindung sind Verbindungen, hergestellt nach dem erfindungsgemäßen Verfahren, bei denen R¹ ein Polyetherfragment ist und bei denen mindestens ein Fragment, dass durch die Reaktion unter Ringöffnung der Reaktionskomponenten der Formeln (I) bis (VI) in die entstehende modifizierte Polymerkette eingefügt wurden, vorhanden ist, mit der Maßgabe, dass das Fragment entstanden bei der Ringöffnung der Verbindungen der Formel (I) nicht endständig ist.

Bevorzugt sind Verbindungen der Formel (VIII) bei denen R¹ ein Polyetherfragment ist und bei denen mindestens einer der Indices e bis j größer oder gleich 0 und bevorzugt größer oder gleich 1 ist, mit der Maßgabe, dass das Fragment mit dem Index d nicht endständig ist.

Wie ²⁹Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die erfindungsgemäßen Alkoxylierungsprodukte neben den nicht umgeesterten Spezies, wie sie in Formel (VIII) wiedergegeben sind, solche mit der doppelten, zum Teil dreifachen oder gar vielfachen Molmasse enthalten. Formel (VIII) gibt mithin die komplexe chemische Realität nur vereinfacht wieder.
Ein weiterer Gegenstand der Erfindung sind somit auch Zusammensetzungen enthaltend Verbindungen in denen die Summe der Indices (a) plus (b) in Formel (VIII) im statistischen Mittel kleiner als 3 ist, da ein Teil der OR-Gruppen durch Silylpolyethergruppen ersetzt werden kann. Die Zusammensetzungen enthalten somit Spezies die am Siliziumatom unter Abspaltung von R-OH und Kondensationsreaktion mit der reaktiven OH-Gruppe eines weiteren Moleküls der Formel (VIII) ausgebildet werden. Diese Reaktion kann mehrfach ablaufen bis z.B. alle RO-Gruppen am Silizium gegen weitere Moleküle der Formel (VIII) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster.
Die angegebenen Werte und Vorzugsbereiche für die Indizes (a) bis (j) sind somit auch nur als Mittelwerte über die verschiedenen, einzeln nicht fassbare Spezies zu verstehen.

Ein weiterer Gegenstand der Erfindung sind Verbindungen, hergestellt nach dem erfindungsgemäßen Verfahren, die keine mono-alkoxysilyl-terminalen Spezies enthalten. Bevorzugt sind Verbindungen der Formel (VIII), die keine mono-alkyloxysilyl-terminalen Spezies enthalten.

Ein weiterer Gegenstand der Erfindung sind alle Verbindungen, hergestellt nach dem erfindungsgemäßen Verfahren, ausgenommen mono-alkoxysilyl-terminierter Spezies, die unter Verwendung ausschließlich solcher Alkylenoxidmonomeren der Formel (II) entstehen, bei denen gleichzeitig die Reste R², R³, R⁵, R⁶ entweder alle gleich Wasserstoff sind, oder bei denen R², R³, R⁵ gleich Wasserstoff und R⁶ gleich Methyl ist, oder bei denen R², R³, R⁶ gleich Wasserstoff und R⁵ gleich Methyl ist. Bevorzugt sind alle Verbindungen der Formel (VIII), ausgenommen solcher mono-alkoxysilyl-terminierter Spezies, bei denen der Index e ungleich 0 ist und die nur aus solchen Alkylenoxidmonomeren der Formel (II) entstehen, bei denen gleichzeitig die Reste R², R³, R⁵, R⁶ entweder alle gleich Wasserstoff sind, oder bei denen R², R³, R⁵ gleich Wasserstoff und R⁶ gleich Methyl ist, oder bei denen R², R³, R⁶ gleich Wasserstoff und R⁵ gleich Methyl ist.

Ein weiterer Gegenstand der Erfindung sind Verbindungen, hergestellt nach dem erfindungsgemäßen Verfahren, bei denen zumindest ein Fragment, entstanden durch die Reaktion unter Ringöffnung der Reaktionskomponenten der Formeln **(III) bis (VI), in die entstehende** modifizierte Polymerkette eingefügt wurde. Bevorzugt sind Verbindungen der Formel (VIII), bei denen zumindest einer der Indices f, g, h, i, und/oder j ungleich 0 ist.

Ein weiterer Gegenstand der Erfindung sind Verbindungen, hergestellt nach dem erfindungsgemäßen Verfahren, bei denen R¹ der Startverbindung kein Polyetherfragment ist.
Bevorzugt sind Verbindungen der Formel (VIII), bei denen R¹ kein Polyetherfragment ist.

Diese neuartigen, erfindungsgemäßen reaktiven Polyether stellen auf Grund ihrer hydrolyseempfindlichen und zur Vernetzung neigenden Alkoxysilylgruppen härtbare modifizierte Polymere dar. Die Vernetzung zu festen duroplastischen Endprodukten erfolgt auf einfache Weise in Gegenwart von Wasser und wahlweise unter Zusatz von Säure oder Base als Beschleuniger. Durch Erhöhung der Temperatur während des Härtungsvorgangs kann die Topfzeit gesteuert werden. Das erfindungsgemäße Verfahren gestattet es, den Polymeraufbau der erfindungsgemäßen vernetzbaren Produkte je nach Art des Starters sowie Art, Menge und Abfolge der einsetzbaren Epoxidmonomere auf mannigfaltige Weise zu variieren und so anwendungstechnisch wichtige Produkteigenschaften abhängig vom Verwendungszweck maßzuschneidern. So lässt sich beispielsweise durch eine Variation des Anteils an Alkoxysilan-Einheiten in der modifizierten Polymerkette die Vernetzungsdichte und damit das mechanische und physiko-chemische Eigenschaftsprofil der ausgehärteten modifizierten Polymere in weiten Grenzen beeinflussen. Der Einbau weiterer Comonomere wie Lactone, cycl. Anhydride, Kohlendioxid oder Oxetane eröffnet noch weitergehende Struktur- und Eigenschaftsvariationen unter Ausbildung von Ester- oder Carbonatgruppen in der modifizierten Polymerkette.

Die hergestellten modifizierten Polymere und damit die erfindungsgemäßen Alkoxysilylpolyether der Formel (VIII) eignen sich beispielsweise zur Verwendung als Grundstoffe für die Herstellung von Kleb- und Dichtstoffen, zur Oberflächenbeschichtung, als reaktive Vernetzer, als Haftvermittler und Primer für verschiedene Substrate wie Metalle, Glas und Glasfasern/Glasgewebe, generell silikatische Materialien, oder auch zur Oberflächenbehandlung von z.B. Pigmenten und Füllstoffen in Lacken oder Kunststoffen.

Das erfindungsgemäße Verfahren zur direkten Alkoxylierung Epoxidgruppen tragender Alkoxysilane mittels DMC-Katalyse unterscheidet sich grundlegend von den bislang aus den Patentschriften DE 69831518 T2, JP 11021463, JP 08295805, JP 09012863, JP 09012861, JP 07062222 beschriebenen Verfahrensweisen. Auch die erfindungsgemäßen Alkoxysilylgruppen enthaltenden vernetzbaren Polyether unterscheiden sich signifikant von den in oben genannten Schutzrechten beschriebenen Polyethern mit ausschließlich terminalen Alkoxysilyleinheiten. Mit der durch das neue Verfahren geschaffenen Möglichkeit der direkten Alkoxylierung von hydrolyseempfindlichen, vernetzbaren epoxidfunktionellen Alkoxysilanen wie z.B. 3-Glycidyloxypropyltrimethoxysilan und 3-Glycidyloxypropyltriethoxysilan steht ein Instrument zur Verfügung, das es erlaubt, die Vorteile der DMC-Technologie weiter zu nutzen und eine neue Klasse von vernetzbaren modifizierten Polymeren herzustellen. Über die Auswahl der Startverbindung mit reaktivem Wasserstoff, die Art der eingesetzten epoxidfunktionellen Alkoxysilane, welche gegebenenfalls kombiniert mit Alkylenoxiden oder anderen Glycidylverbindungen eingesetzt werden können, sowie durch die Variation der Zusammensetzung von Mischungen dieser Epoxidverbindungen und die Reihenfolge ihrer Addition während des DMC-katalysierten Alkoxylierungsprozesses lassen sich der modifizierte Polymeraufbau und dessen -eigenschaften nahezu beliebig einstellen.

Als Reaktoren für die erfindungsgemäß beanspruchte Umsetzung können prinzipiell alle geeigneten Reaktortypen zum Einsatz kommen, die die Reaktion und ihre eventuell vorhandene Wärmetönung beherrschen lassen.
Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen.

Neben herkömmlichen Rührkesselreaktoren können auch Strahlschlaufenreaktoren mit Gasphase und internen Wärmetauscherrohren, wie in WO 01/062826 beschrieben, verwendet werden. Darüber hinaus können gasphasenfreie Loop-Reaktoren eingesetzt werden.

Bei der Dosierung der Edukte ist eine gute Verteilung der an der chemischen Umsetzung beteiligten Stoffe, d.h. der Epoxidmonomere, Starter, DMC-Katalysator und gegebenenfalls Suspensionsmittel oder Comonomere wie Lactone, Anhydride oder Kohlendioxid notwendig.

Weitere Gegenstände der Erfindung werden durch die Ansprüche beschrieben.

Die erfindungsgemäßen Polyether und die entsprechenden Verfahren zu deren Herstellung werden nachfolgend beispielhaft beschrieben, ohne dass die Erfindung als auf diese beispielhaften Ausführungsformen beschränkt angesehen werden kann.
Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

Herstellung von Alkoxysilylgruppen tragenden Polyetheralkoholen nach erfindungsgemäßem Verfahren mit Hilfe von DMC-Katalysatoren. OH-Zahlen wurden nach der Kaltacetylierungsmethode in Anlehnung an die Analysenvorschrift C-V 17A (98) der Deutschen Gesellschaft für Fettwissenschaft (DGF) durchgeführt, bestimmt. Die mittleren Molmassen wurden aus den so bestimmten OH-Zahlen rechnerisch ermittelt. Der Epoxidsauerstoffgehalt der Endprodukte wurde in Gegenwart von HCl conc. nach dem Prinzip der Rücktitration mit Natronlauge bestimmt.

### Beispiel 1:

In einem 3 Liter Autoklaven werden 130,2 g Polypropylenglykolmonobutylether (mittlere Molmasse 520 g/mol) und 0,10 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 58,0 g Propylenoxid zugeführt. Nach 15 min und Anspringen der Reaktion (erfolgter Reaktorinnendruckabfall) werden gleichzeitig und aus zwei verschiedenen Vorlagebehältern 556,0 g 3-Glycidyloxypropyltriethoxysilan (DYNASYLAN^{®} GLYEO) sowie 1363,0 g Propylenoxid kontinuierlich und unter Kühlen innerhalb von 30 min bei 130 °C und max. 0,9 bar Reaktorinnendruck absolut zudosiert. An die 90 minütige Nachreaktion bei 130-150 °C schließt sich die Entgasungsstufe an. Dabei werden flüchtige Anteile wie restliches Propylenoxid im Vakuum abdestilliert. Der fertige niedrigviskose und farblose Polyether wird auf unter 80 °C abgekühlt und aus dem Reaktor abgelassen.
Das erhaltene Polyetherol enthält im Mittel pro Molekül 8 Trialkoxysilyleinheiten, hat eine OH-Zahl von 7,6 mg KOH/g und eine mittlere Molmasse von 7400 g/mol. Freie Epoxidgruppen sind im Endprodukt nicht nachweisbar.

### Beispiel 2:

In einem 3 Liter Autoklaven werden 200,0 g Polypropylenglykolmonobutylether (mittlere Molmasse 750 g/mol) und 0,015 g Zinkhexacyanocobaltat-DMC-Katalysator unter Stickstoff vorgelegt. Der Ansatz wird auf 130 °C aufgeheizt, anschließend bei 30 mbar von evtl. flüchtigen Inhaltsstoffen befreit. Zur Aktivierung des DMC-Katalysators wird eine Portion von 225,0 g 3-Glycidyloxypropyltriethoxysilan (DYNASYLAN^{®} GLYEO) zugeführt. Nach Anspringen der Reaktion (leichte exotherme Wärmetönung) und Abreaktion von DYNASYLAN^{®} GLYEO werden zunächst 59,1 g Ethylenoxid in 10 min und abschließend weitere 225,0 g 3-Glycidyloxypropyltriethoxysilan (DYNASYLAN^{®} GLYEO) in 20 min unter Kühlen bei 130 °C und max. 0,8 bar Reaktorinnendruck absolut zudosiert. An die 90 minütige Nachreaktion bei 130-150 °C schließt sich die Entgasungsstufe an, um flüchtige Anteile zu entfernen.

Das erhaltenen Polyetherol ist aus DYNASYLAN^{®} GLYEO- und Ethylenoxid-Blöcken aufgebaut, niedrigviskos, enthält im Mittel pro Molekül 6 Trialkoxysilyleinheiten, hat eine OH-Zahl von 22,4 mg KOH/g und eine mittlere Molmasse von 2500 g/mol. Freie Epoxidgruppen sind im Endprodukt nicht nachweisbar.

### Beispiel 3:

In einem 3 Liter Autoklaven werden 65,1 g 1-Octanol und 0,065 g Zinkhexacyanocobaltat-DMC-Katalysator unter Stickstoff vorgelegt. Der Ansatz wird auf 130 °C aufgeheizt und anschließend bei 400 mbar von evtl. flüchtigen Inhaltsstoffen befreit. Zur Aktivierung des DMC-Katalysators wird eine Portion von 58, 0 g Propylenoxid zugeführt. Nach Anspringen der Reaktion (Innendruckabfall) werden nacheinander bei jeweils 130 °C zuerst 236,0 g 3-Glycidyloxypropyltrimethoxysilan (DYNASYLAN^{®} GLYMO) in 35 min, daran anschließend nach einer Nachreaktionszeit von 30 min 220,0 g Ethylenoxid in 10 min unter Kühlen und max. 1,5 bar Reaktorinnendruck absolut zudosiert. An die 90 minütige Nachreaktion bei 150 °C schließt sich die Entgasungsstufe an, um flüchtige Anteile zu entfernen.
Das erhaltenen Polyetherol ist aus einem DYNASYLAN^{®} GLYMO- und Ethylenoxid-Block aufgebaut, enthält im Mittel pro Molekül 2 Trialkoxysilyleinheiten, hat eine OH-Zahl von 49,4 mg KOH/g und eine mittlere Molmasse von 1160 g/mol. Freie Epoxidgruppen sind im Endprodukt nicht nachweisbar.

### Beispiel 4:

In einem 3 Liter Autoklaven werden 200,0 g Polypropylenglykolmonoallylether (mittlere Molmasse 520 g/mol), 0,017 g Zinkhexacyanocobaltat-DMC-Katalysator unter Stickstoff vorgelegt. Der Ansatz wurd auf 130 °C aufgeheizt und bei 30 mbar von evtl. flüchtigen Inhaltsstoffen befreit. Zur Aktivierung des DMC-Katalysators wird eine Portion von 50,0 g Propylenoxid zugeführt. Nach Anspringen der Reaktion (Innendruckabfall) werden bei 125 °C 319,0 g 3-Glycidyloxypropyltrimethoxysilan (DYNASYLAN^{®} GLYMO) in 40 min zugegeben. Nach einer Nachreaktionszeit von 120 min bei 130-140 °C schließt sich die Entgasungsstufe an, um flüchtige Anteile zu entfernen.
Das erhaltene niedrigviskose, farblose Polyetherol enthält einen terminalen DYNASYLAN^{®} GLYMO-Block (im Mittel pro Molekül 5 Trialkoxysilyleinheiten), hat eine OH-Zahl von 27,5 mg KOH/g und eine mittlere Molmasse von 2040 g/mol. Freie Epoxidgruppen sind im Endprodukt nicht nachweisbar.

### Beispiel 5:

In einem 3 Liter Autoklaven werden 375,0 g Polypropylenglykolmonobutylether (mittlere Molmasse 750 g/mol) und 0,250 g Zinkhexacyanocobaltat-DMC-Katalysator unter Stickstoff vorgelegt. Der Ansatz wird auf 130 °C aufgeheizt und anschließend bei 30 mbar von evtl. flüchtigen Inhaltsstoffen befreit. Zur Aktivierung des DMC-Katalysators wird eine Portion von 58,0 g Propylenoxid zugeführt. Nach Anspringen der Reaktion (Innendruckabfall) werden bei 130-150 °C 588,0 g einer homogenen Mischung aus 3-Glycidyloxypropyltriethoxysilan (DYNASYLAN^{®} GLYEO, 417,0 g) und ε-Caprolacton (171,0 g) in 60 min zugegeben. Nach einer Nachreaktionszeit von 120 min bei 120-130 °C werden 725,0 g Propylenoxid innerhalb von 15 min bei 130 °C und einem Reaktorinnendruck von max. 1 bar absolut kontinuierlich zugefügt. Nach erneuter Nachreaktion von 30 min bei 130 °C schließt sich die Entgasungsstufe an, um flüchtige Anteile zu entfernen.
Der erhaltene leicht gelbliche Polyetherester enthält einen Block aus statistisch verteilten Trialkoxysilyl- und Estereinheiten (im Mittel je 3 mol DYNASYLAN^{®} GLYEO und ε-Caprolacton pro Polymermolekül), gefolgt von einem terminalen 25 mol Propylenoxidblock, hat eine OH-Zahl von 17,0 mg KOH/g und eine mittlere Molmasse von 3300 g/mol. Freie Epoxidgruppen sind im Endprodukt nicht nachweisbar.

### Beispiel 6:

In einem 3 Liter Autoklaven werden 375,0 g Polypropylenglykolmonobutylether (mittlere Molmasse 750 g/mol) und 0,16 g Zinkhexacyanocobaltat-DMC-Katalysator unter Stickstoff vorgelegt. Der Ansatz wird auf 130 °C aufgeheizt und anschließend bei 30 mbar von evtl. flüchtigen Inhaltsstoffen befreit. Zur Aktivierung des DMC-Katalysators wird eine Portion von 354,3 g 3-Glycidyloxypropyltrimethoxysilan (DYNASYLAN^{®} GLYMO) zugeführt. Nach Anspringen der Reaktion und Abreaktion von DYNASYLAN^{®} GLYMO wird der Ansatz auf 110 °C gekühlt. Bis zu einem Innendruck von 5 bar absolut wird gasförmiges Kohlendioxid in den Autoklaven dosiert. 1740,0 g Propylenoxid werden in 110 min bei 110 °C unter Kühlen kontinuierlich zugegeben. Ein Druckabfall auf unter 5 bar signalisiert das Abreagieren von Kohlendioxid. Während der Propylenoxiddosierung wird portionsweise Kohlendioxid nachdosiert, um den Reaktorinnendruck zwischen 4 und 5 bar zu halten. Nach 90 min Nachreaktion bei 110 °C und einem Druckabfall auf <2 bar wird der Ansatz im Vakuum entgast, um flüchtige Anteile zu entfernen.
Das erhaltene niedrigviskose Polyethercarbonat enthält einen DYNASYLAN^{®} GLYMO-Block (im Mittel pro Molekül 3 Trialkoxysilyleinheiten) sowie einen 60 mol Propylenoxidblock, in dem Carbonatgruppen statistisch verteilt sind. Das Produkt hat eine OH-Zahl von 12 mg KOH/g und eine mittlere Molmasse von 4675 g/mol. Der Carbonatgehalt beträgt ca. 4 Gew.-%. Freie Epoxidgruppen sind im Endprodukt nicht nachweisbar.

### Beispiel 7:

In einem 3 Liter Autoklaven werden 375,0 g Polypropylenglykolmonobutylether (mittlere Molmasse 750 g/mol), 154,0 g Hexahydrophthalsäureanhydrid (HHPSA) und 0,350 g Zinkhexacyanocobaltat-DMC-Katalysator unter Stickstoff vorgelegt. Der Ansatz wird auf 130 °C aufgeheizt und anschließend bei 30 mbar von evtl. flüchtigen Inhaltsstoffen befreit. Zur Aktivierung des DMC-Katalysators wird eine Portion von 58,0 g Propylenoxid zugeführt. Nach Anspringen der Reaktion (Innendruckabfall) werden bei 130 °C 418,0 g 3-Glycidyloxypropyltriethoxysilan (DYNASYLAN^{®} GLYEO) in 20 min zugegeben. Nach einer Nachreaktionszeit von 150 min bei 130-150 °C wird das Reaktionsgemisch auf 130 °C abgekühlt. Nach Zugabe von 435,0 g Propylenoxid bei 130 °C innerhalb von 15 min schließt sich die Entgasungsstufe an, um flüchtige Anteile zu entfernen.
Der erhaltene farblose Polyetherester enthält im Mittel pro Molekül 2 mol HHPSA und 3 mol DYNASYLAN^{®} GLYEO in statistisch gemischter Abfolge, gefolgt von einem 30 mol Endblock aus Propylenoxideinheiten. Die OH-Zahl beträgt 23,0 mg KOH/g, die mittlere Molmasse 2440 g/mol. Freie Epoxidgruppen sind im Endprodukt nicht nachweisbar.

### Beispiel 8:

In einem 3 Liter Autoklaven werden 214,0 g Polypropylenglykolmonoallylether (mittlere Molmasse 430 g/mol), 278,2 g 3-Glycidyloxypropyltriethoxysilan (DYNASYLAN^{®} GLYEO) und 0,225 g Zinkhexacyanocobaltat-DMC-Katalysator unter Stickstoff vorgelegt. Der Ansatz wird auf 150 °C aufgeheizt, anschließend bei 30 mbar von evtl. flüchtigen Inhaltsstoffen befreit. Nach einer Haltezeit von 30 min bei 150 °C und erfolgter Aktivierung des DMC-Katalysators wird das Reaktionsgemisch auf 130 °C abgekühlt. Im Anschluss werden 348,0 g Propylenoxid in 15 min bei max. 1 bar Innendruck absolut zugeführt. Bei jeweils 130 °C und max. 1 bar Innendruck absolut werden nacheinander 114,0 g ε -Caprolacton in 25 min, 216,1 g 1,2-Butylenoxid in 15 min, 236,2 g 3-Glycidyloxypropyltrimethoxysilan (DYNASYLAN^{®} GLYMO) in 45 min, 120,0 g Styroloxid in 15 min sowie abschließend 290 g Propylenoxid in 40 min zugegeben. Nach jeder Zugabeportion wird eine etwa 15 minütige Haltezeit bei 130 °C bis zur Dosierung des nächsten Monomeren eingehalten. An die Dosierung des Propylenoxidendblocks schließt sich eine Nachreaktionszeit von 30 min bei 130 °C an. Abschließend wird entgast, um flüchtige Anteile zu entfernen.
Der erhaltene leicht gelbliche aromatisch modifizierte Polyetherester enthält im Mittel pro Molekül blockartig nacheinander 2 mol DYNASYLAN^{®} GLYEO, 12 mol Propylenoxid, 2 mol ε-Caprolacton, 6 mol 1,2-Butylenoxid, 2 mol DYNASYLAN^{®} GLYMO, 2 mol Styroloxid und 10 mol Propylenoxid als Endblock. Die OH-Zahl beträgt 18,0 mg KOH/g, die mittlere Molmasse 3120 g/mol. Freie Epoxidgruppen sind im Endprodukt nicht nachweisbar.

## Patentansprüche

1. Verfahren zur Herstellung von Alkoxysilylgruppen aufweisenden Polyetheralkoholen mittels DMC-Katalyse, **dadurch gekennzeichnet, dass** ein oder mehrere epoxidfunktionelle Alkoxysilane einzeln oder im Gemisch mit weiteren Epoxidverbindungen und gegebenenfalls weiteren Comonomeren wahlweise blockartig oder statistisch verteilt an einen Kettenstarter der Formel (VII)
R¹-H (VII)
mit mindestens einer reaktiven Hydroxylgruppe addiert werden, wobei R¹ einem gesättigten oder ungesättigten, gegebenenfalls verzweigten Rest, oder einen Polyetherrest vom Typ einer Alkoxy-, Arylalkoxy- oder Alkylarylalkoxygruppe darstellt, bei dem die Kohlenstoffkette durch Sauerstoffatome unterbrochen sein kann oder einem Polyetheralkoxyrest oder einer einfach oder mehrfach annelierten phenolischen Gruppe entspricht.

2. Verfahren nach Anspruch 1, **dadurch gekennzeichnet, dass** als epoxidfunktionelles Alkoxysilan eine Verbindung der Formel (I) eingesetzt wird, 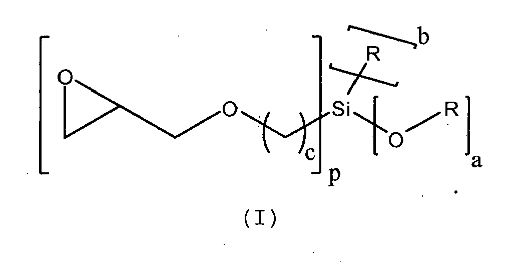 wobei
R einem oder mehreren gleichen oder verschiedenen Resten entspricht, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen und
a eine ganze Zahl von 1 bis 3,
b eine ganze Zahl von 0 bis 2, die Summe von a und b gleich 3 ist,
c eine ganze Zahl von 0 bis 24 und
p eine ganze Zahl ist, die der Differenz aus 4-a-b entspricht.

3. Verfahren nach Anspruch 1 oder 2, **dadurch gekennzeichnet, dass** ein oder mehrere epoxidfunktionelle Alkoxysilane gemäß Formel (I) 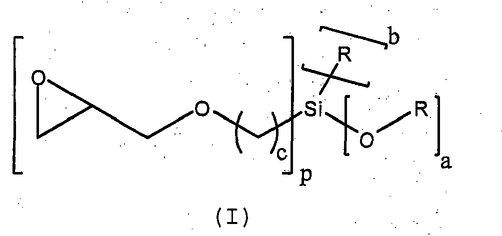 einzeln oder im Gemisch mit weiteren Epoxidverbindungen der Formeln (II) 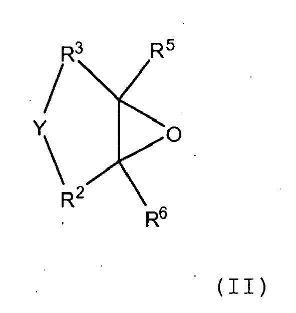 und/oder (III) 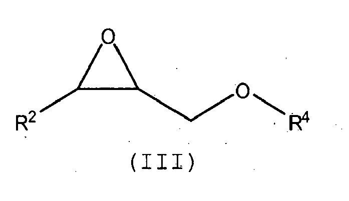 und/oder gegebenenfalls weiteren Comonomeren wie Lactonen (IV), 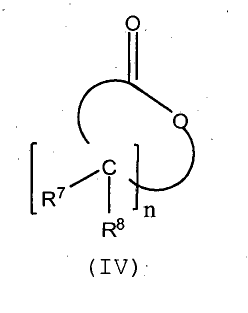 und/oder cyclischen Anhydriden (V), (VI), 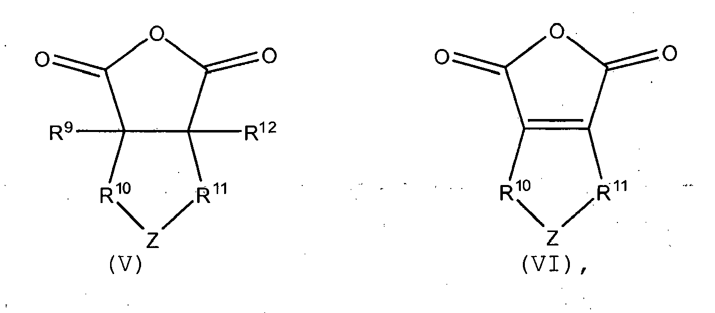 und/oder Kohlendioxid und/oder Oxetanen, wahlweise blockartig oder statistisch verteilt an einen Kettenstarter der Formel (VII)
R¹-H (VII)
mit mindestens einem reaktivem Wasserstoff addiert werden, wobei
R einem oder mehreren gleichen oder verschiedenen Resten, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen entspricht und
a eine ganze Zahl von 1 bis 3,
b eine ganze Zahl von 0 bis 2, die Summe von a und b gleich 3 ist,
c eine ganze Zahl von 0 bis 24 und
p eine ganze Zahl ist, die der Differenz aus 4-a-b entspricht,
R¹ einem gesättigten oder ungesättigten, gegebenenfalls verzweigten Rest, einem Polyetherrest vom Typ einer Alkoxy-, Arylalkoxy- oder Alkylarylalkoxygruppe, bei der die Kohlenstoffkette durch Sauerstoffatome unterbrochen sein kann, einen Polyetheralkoxyrest oder einer einfach oder mehrfach annelierten phenolischen Gruppe entspricht,
R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest ist, wobei für die Reste R⁵ oder R⁶ gilt, dass sie gleich einem einwertigen Kohlenwasserstoffrest sind und der Kohlenwasserstoffrest cycloaliphatisch über das Fragment Y verbrückt sein kann, wobei
Y nicht vorhanden sein kann, oder aber eine Methylenbrücke mit 1 oder 2 Methyleneinheiten ist, mit der Maßgabe, dass bei nicht vorhandenem Y die Reste R² oder R³ unabhängig voneinander gleich einem linearen oder verzweigten Rest mit 1 bis 20 Kohlenstoffatomen sind,
R⁴ eine Glycidyloxypropyl-Gruppe ist, die über eine Ether- oder Esterfunktion an einen linearen oder verzweigten Alkylrest von 1 bis 24 Kohlenstoffatomen oder über einen aromatischen oder cycloaliphatischen Rest gebunden ist,
n eine ganze Zahl von 2 bis 8 ist und R⁷ und R⁸ unabhängig voneinander entweder Wasserstoff, Alkyl-, Alkoxy-, Aryl- oder Aralkylgruppen darstellen, und
R⁹, R¹⁰, R¹¹ und R¹² unabhängig voneinander entweder Wasserstoff, Alkyl-, Alkenyl-, Alkoxy-, Aryl- oder Aralkylgruppen darstellen, wobei der Alkylrest oder Alkenylrest cycloaliphatisch oder aromatisch über das Fragment Z verbrückt sein kann, wobei Z sowohl einen divalenten Alkylenals auch Alkenylenrest darstellen kann.

4. Verfahren nach zumindest einem der Ansprüche 1 bis 3, **dadurch gekennzeichnet, dass** die Reaktion in Lösungsmitteln oder Suspensionsmitteln und/oder deren Mischungen durchgeführt wird.

5. Verfahren nach Anspruch 3, **dadurch gekennzeichnet, dass** die Reaktion in einem oder mehreren inerten Lösungsmitteln durchgeführt wird.

6. Verfahren nach Anspruch 3, **dadurch gekennzeichnet, dass** die Reaktion unter Verwendung einer oder mehrerer Startverbindungen der Formel (VII) als Lösungs- oder Suspensionsmittel, gegebenenfalls in Anwesenheit weiterer inerter Lösungsmittel oder Suspensionsmittel durchgeführt wird.

7. Verfahren nach zumindest einem der Ansprüche 1 bis 6, **dadurch gekennzeichnet, dass** die Dosierung der Epoxidkomponenten, Lactone, cyclischen Anhydride der Formeln (I) bis (VI) allein oder in Mischung miteinander in beliebiger Reihenfolge und variabler Menge nacheinander oder zeitlich parallel zueinander oder auch jeweils nacheinander alternierend erfolgt.

8. Verfahren nach zumindest einem der Ansprüche 1 bis 7, **dadurch gekennzeichnet, dass** die Alkoxylierung der epoxidfunktionellen Alkoxysilane (I), gegebenenfalls in Anwesenheit von weiteren Epoxidverbindungen der Formeln (II) oder (III) und/oder Comonomeren gemäß den Formeln (IV), (V) und/oder (VI) in Gegenwart von Kohlendioxid durchgeführt wird.

9. Verfahren nach Anspruch 8, **dadurch gekennzeichnet, dass** carbonatgruppen-modifizierte Polyether bzw. Polyetherester durch Insertion von Kohlendioxid in die modifizierte Polymerkette hergestellt werden.

10. Verfahren nach zumindest einem der Ansprüche 1 bis 9, **dadurch gekennzeichnet, dass** als Starter der Formel R¹-H (VII) Verbindungen mit Molmassen von 50 bis 10.000 g/mol und mit 1 bis 8 Hydroxylgruppen im Molekül und/oder niedermolekulare Polyetherole mit 1-8 Hydroxylgruppen und Molmassen von 50 bis 2000 g/mol eingesetzt werden.

11. Verfahren nach zumindest einem der Ansprüche 1 bis 9, **dadurch gekennzeichnet, dass** als Starter der Formel R¹-H (VII) Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und/oder Polypropylenglykol, Poly-THF, OH-funktionelle Polyolefine wie OH-funktionelles Polybutadien, 1,4-Butandiol, 1,6-Hexandiol, 1,4-Butindiol, Tetramethyldecindiol, Trimethylolpropan, Glycerin, Pentaerythrit, Sorbit, Cellulosezucker, Lignin oder auch und/oder weitere auf Naturstoffen basierende, Hydroxylgruppen tragende Verbindungen und/oder Phenol, Alkyl- und Arylphenole, Bisphenol A und Novolake eingesetzt werden.

12. Verfahren nach zumindest einem der Ansprüche 1 bis 11, **dadurch gekennzeichnet, dass** das molare Verhältnis von epoxidfunktionellen Verbindungen (I) bis (VI) zu reaktiven Gruppen, insbesondere OH-Gruppen in den Produkten bei 1 bis 10⁵ zu 1 liegt.

13. Verfahren nach zumindest einem der Ansprüche 1 bis 12, **dadurch gekennzeichnet, dass** die Reaktionsführung kontinuierlich, semi-kontinuierlich öder auch batchweise erfolgt.

14. Verbindungen, hergestellt nach einem der Verfahren gemäß zumindest einem der Ansprüche 1 bis 13, mit der Maßgabe, dass die Verbindungen der Formeln 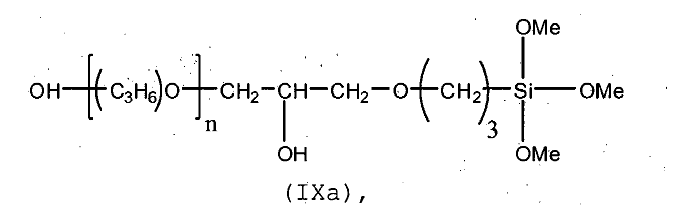 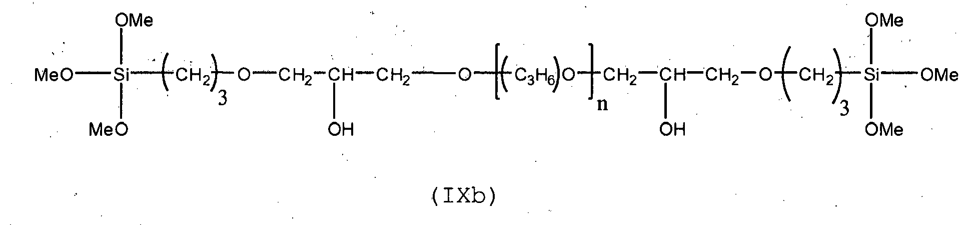 und 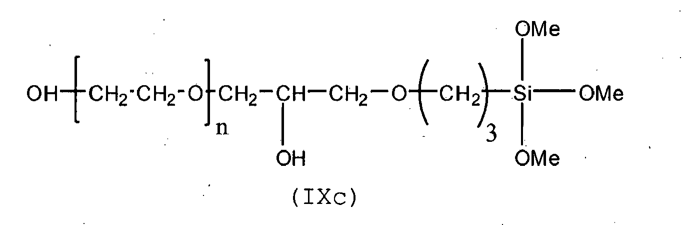 sowie 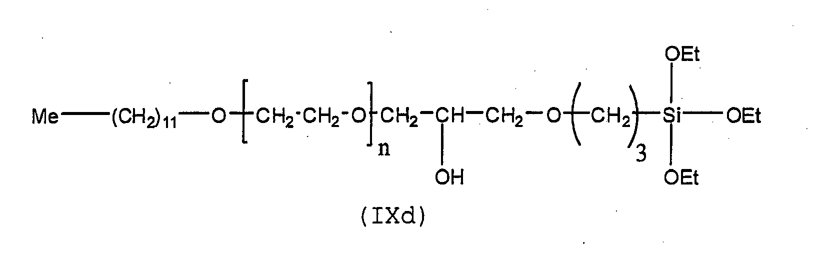 nicht mitumfasst sind.

15. Verbindungen nach Anspruch 14 enthaltend eine -O-(CH₂)_{c}-Si(R)_{b}(OR)ₐ -, **dadurch gekennzeichnet, dass** jede -O-(CH₂)_{c}-Si(R)_{b}(OR)ₐ -Gruppe stets über eine zwischengeschaltete alpha-ständige Oxypropylenfunktionalität in das gebildete Präpolymer eingebunden ist.

16. Alkoxysilanpolyether der Formel (VIII) 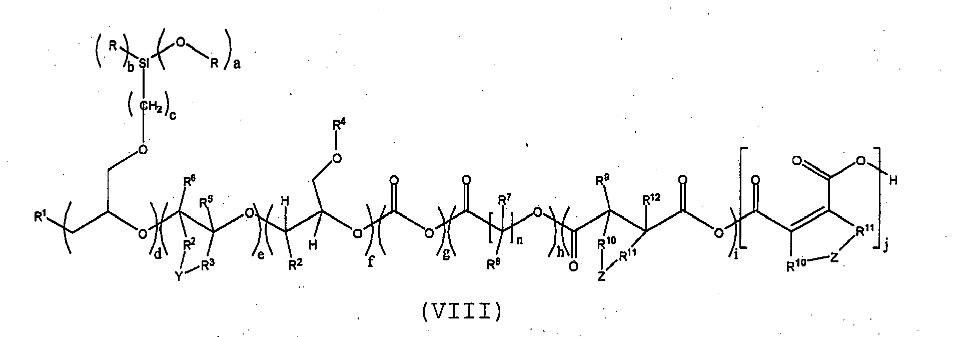 wobei
d eine ganze Zahl von 1 bis 1.000 ist,
e eine ganze Zahl von 0 bis 10.000 ist,
f eine ganze Zahl von 0 bis 1.000 ist,
g eine ganze Zahl von 0 bis 1.000 ist,
h, i und j ganze Zahlen von 0 bis 500 sind, und mit der Maßgabe, dass die Fragmente mit den Indices d bis j untereinander frei permutierbar sind,
und
wobei
R einem oder mehreren gleichen oder verschiedenen Resten, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen entspricht und
c eine ganze Zahl von 0 bis 18 darstellt,
R¹ einem gesättigten oder ungesättigten, gegebenenfalls verzweigten Rest, einem Polyetherrest vom Typ einer Alkoxy-, Arylalkoxy- oder Alkylarylalkoxygruppe, bei der die Kohlenstoffkette durch Sauerstoffatome unterbrochen sein kann, einen Polyetheralkoxyrest oder einer einfach oder mehrfach annelierten phenolischen Gruppe entspricht,
R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest ist, wobei für die Reste R⁵ oder R⁶ gilt, dass sie gleich einem einwertigen Kohlenwasserstoffrest sind und der Kohlenwasserstoffrest cycloaliphatisch über das Fragment Y verbrückt sein kann, wobei
Y nicht vorhanden sein kann, oder aber eine Methylenbrücke mit 1 oder 2 Methyleneinheiten ist, mit der Maßgabe, dass bei nicht vorhandenem Y die Reste R² oder R³ unabhängig voneinander gleich einem linearen oder verzweigten Rest mit 1 bis 20 Kohlenstoffatomen sind,
R⁴ eine Glycidyloxypropyl-Gruppe ist, die über eine Ether- oder Esterfunktion an einen linearen oder verzweigten Alkylrest von 1 bis 24 Kohlenstoffatomen oder über einen aromatischen oder cycloaliphatischen Rest gebunden ist,
n eine ganze Zahl von 2 bis 8 ist und R⁷ und R⁸ unabhängig voneinander entweder Wasserstoff, Alkyl-, Alkoxy-, Aryl- oder Aralkylgruppen darstellen, und
R⁹, R¹⁰, R¹¹ und R¹² unabhängig voneinander entweder Wasserstoff, Alkyl-, Alkenyl-, Alkoxy-, Aryl- oder Aralkylgruppen darstellen, wobei der Alkylrest oder Alkenylrest cycloaliphatisch oder aromatisch über das Fragment Z verbrückt sein kann, wobei Z sowohl einen divalenten Alkylen- als auch Alkenylenrest darstellen kann,
mit der Maßgabe, dass die Verbindungen der Formeln 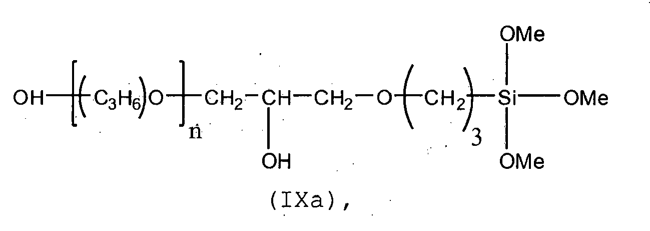 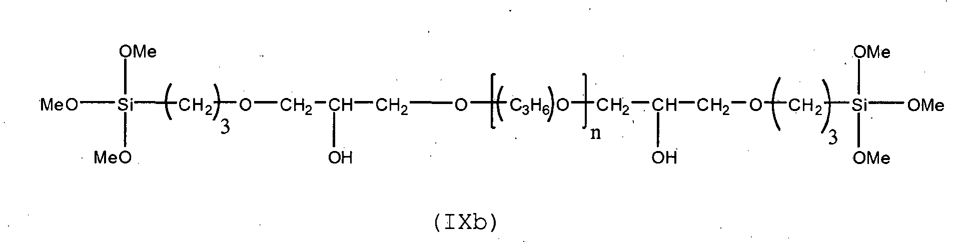 und 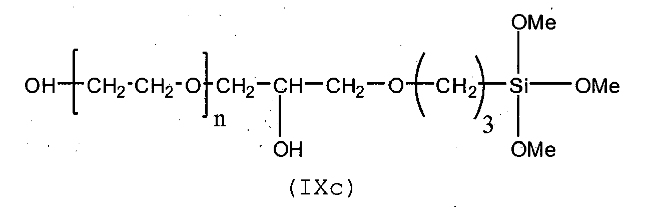 sowie 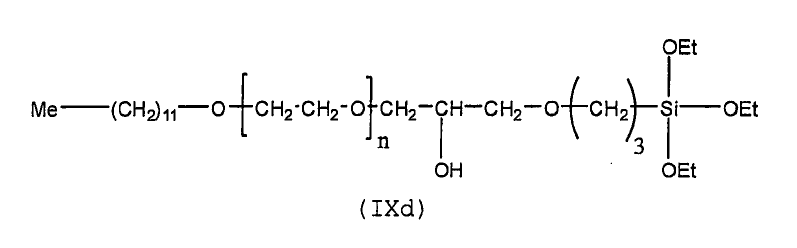 nicht mitumfasst sind.

17. Verbindungen nach Anspruch 16, **dadurch gekennzeichnet, dass** der Index d größer als 4 ist.

18. Verbindungen nach Anspruch 16, **dadurch gekennzeichnet, dass** zumindest einer der Indizes e bis j der Formel (VIII) größer gleich 0 ist.

19. Verbindungen nach zumindest einem der Ansprüche 16 bis 18, **dadurch gekennzeichnet, dass** die Summe der Indices (a) und (b) in Formel (VIII) im statistischen Mittel kleiner als 3 ist.

20. Verbindungen nach Anspruch 14 oder 15, **dadurch gekennzeichnet, dass** als Verbindungen der Formel (I) 3-Glycidyloxypropyltrimethoxysilan, 3-Glycidyloxypropyltriethoxysilan, 3-Glycidyloxypropyltripropoxysilan, 3-Glycidyloxypropyl-methyldimethoxysilan, 3-Glycidyloxypropyl-ethyldiethoxysilan und/oder 3-Glycidyloxypropyltriisopropoxysilan zusammen mit Verbindungen der Formel (II), wie Ethylenoxid, Propylenoxid, 1,2- oder 2,3-Butylenoxid, Isobutylenoxid, 1,2-Dodecenoxid, Styroloxid, Cyclohexenoxid, oder 2,3-Epoxy-1-propanol und/oder mit Verbindungen der Formel (III), wie Allyl-, Butyl-, 2-Ethylhexyl-, C₁₂/C₁₄-Fettalkohol-, Phenyl-, p-tert.-Butylphenyl-, o-Kresylglycidylether, Glycidylmethacrylat, Glycidylacrylat oder Neodecansäureglycidylester und/oder mit Verbindungen der Formel (IV) ε-Caprolacton oder δ-Valerolacton, und/oder mit Verbindungen der Formel (V) oder (VI), wie Bernsteinsäureanhydrid, Oct(en)yl-, Dec(en)yl- und Dodec(en)ylbernsteinsäueanhydrid, Maleinsäureanhydrid, Phthalsäureanhydrid, Hexahydro-, Tetrahydro-, Dihydro-, Methylhexahydro- oder Methyltetrahydrophthalsäureanhydrid allein oder in Mischungen miteinander verwendet werden.

21. Verbindungen, hergestellt nach Anspruch 14, **dadurch gekennzeichnet, dass** R¹ ein Polyetherfragment ist und bei denen mindestens ein Fragment, dass durch die Reaktion unter Ringöffnung der Reaktionskomponenten der Formeln (I) bis (VI) in die entstehende modifizierte Polymerkette eingefügt wurden, vorhanden ist, mit der Maßgabe, dass das Fragment entstanden bei der Ringöffnung der Verbindungen der Formel (I), nicht endständig ist.

22. Verbindungen, hergestellt nach Anspruch 14, **dadurch gekennzeichnet, dass** keine mono-alkoxysilylterminalen Spezies enthalten sind.

23. Verbindungen, hergestellt nach Anspruch 14, **dadurch gekennzeichnet, dass** mono-alkoxysilyl-terminierte Spezies, die unter Verwendung ausschließlich solcher Alkylenoxidmonomeren der Formel (II) entstehen, bei denen gleichzeitig die Reste R², R³, R⁵, R⁶ entweder alle gleich Wasserstoff sind, oder bei denen R², R³, R⁵ gleich Wasserstoff und R⁶ gleich Methyl ist, oder bei denen R², R³, R⁶ gleich Wasserstoff und R⁵ gleich Methyl ist, ausgenommen sind.

24. Verbindungen, hergestellt nach Anspruch 14, **dadurch gekennzeichnet, dass** zumindest ein Fragment, entstanden durch die Reaktion unter Ringöffnung der Reaktionskomponenten der Formeln (III) bis (VI), in die entstehende modifizierte Polymerkette eingefügt wurde.

25. Verbindungen, hergestellt nach Anspruch 14, **dadurch gekennzeichnet, dass** R¹ kein Polyetherfragment ist.

26. Verwendung von Verbindungen nach zumindest einem der Ansprüche 14 bis 25 zur Herstellung von Kleb- und Dichtstoffen, zur Oberflächenbeschichtung, als reaktive Vernetzer, als Haftvermittler und Primer oder zur Oberflächenbehandlung von Pigmenten und Füllstoffen in Lacken oder Kunststoffen.

27. Verwendung von Verbindungen hergestellt nach einem der Verfahren gemäß den Ansprüchen 1 bis 13 zur Herstellung von Kleb- und Dichtstoffen, zur Oberflächenbeschichtung, als reaktive Vernetzer, als Haftvermittler und Primer oder zur Oberflächenbehandlung von Pigmenten und Füllstoffen in Lacken oder Kunststoffen.

## Claims

1. Process for preparing polyether alcohols having alkoxysilyl groups by means of DMC catalysis, **characterized in that** one or more epoxy-functional alkoxysilanes are added individually or in a mixture with further epoxide compounds and optionally further comonomers, either in block form or in random distribution, onto a chain starter of the formula (VII)
R¹-H (VII)
having at least one reactive hydroxyl group, where R¹ is a saturated or unsaturated, optionally branched radical, or a polyether radical of the alkoxy, arylalkoxy or alkylarylalkoxy group type, in which the carbon chain may be interrupted by oxygen atoms or corresponds to a polyetheralkoxy radical or to a singularly or multiply fused phenolic group.

2. Process according to Claim 1, **characterized in that** the epoxy-functional alkoxysilane used is a compound of the formula (I) 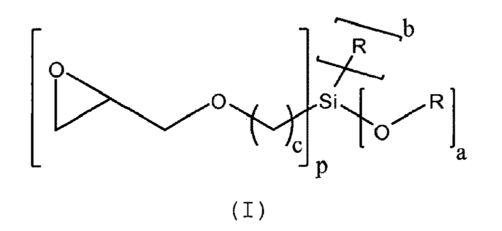 where
R corresponds to one or more identical or different radicals selected from linear and branched, saturated, monounsaturated and polyunsaturated alkyl radicals having 1 to 20 carbon atoms and haloalkyl groups having 1 to 20 carbon atoms, and
a is an integer of 1 to 3,
b is an integer of 0 to 2,
the sum of a and b is equal to 3,
c is an integer of 0 to 24 and
P is an integer which corresponds to the difference of 4-a-b.

3. Process according to Claim 1 or 2, **characterized in that** one or more epoxy-functional alkoxysilanes of the formula (I) 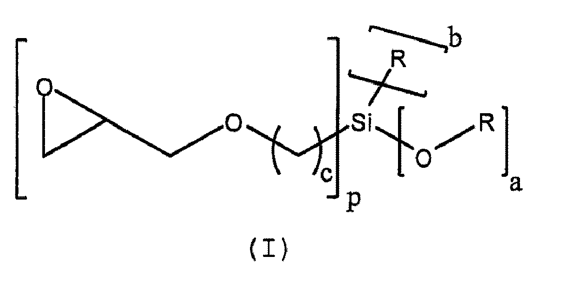 are added individually or in a mixture with further epoxide compounds of the formulae (II) 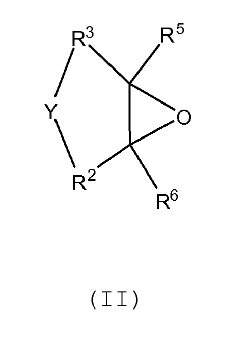 and/or (III) 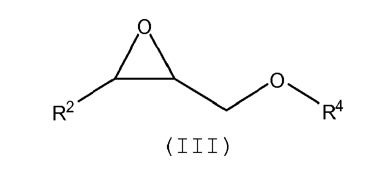 and/or optionally further comonomers such as lactones (IV), 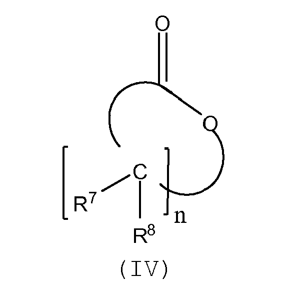 and/or cyclic anhydrides (V), (VI), 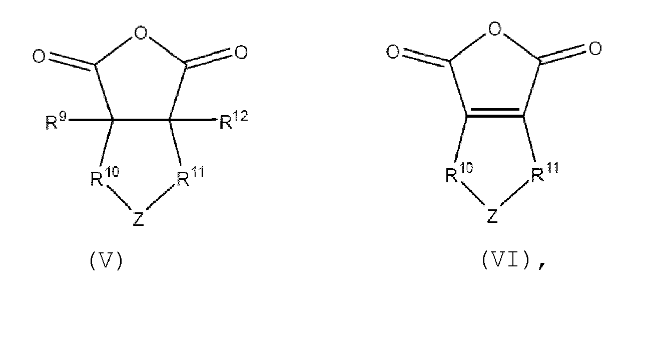 and/or carbon dioxide and/or oxetanes, either in block form or in random distribution, onto a chain starter of the formula (VII)
R¹-H (VII)
having at least one reactive hydrogen, where
R corresponds to one or more identical or different radicals selected from linear and branched, saturated, monounsaturated and polyunsaturated alkyl radicals having 1 to 20 carbon atoms and haloalkyl groups having 1 to 20 carbon atoms, and
a is an integer of 1 to 3,
b is an integer of 0 to 2,
the sum of a and b is equal to 3,
c is an integer of 0 to 24 and
P is an integer which corresponds to the difference of 4-a-b,
R¹ corresponds to a saturated or unsaturated, optionally branched radical, to a polyether radical of the alkoxy, arylalkoxy or alkylarylalkoxy group type, in which the carbon chain may be interrupted by oxygen atoms, a polyetheralkoxy radical or a singularly or multiply fused phenolic group,
R² and R³, and R⁵ and R⁶, are the same or else are each independently H or a saturated or optionally mono- or polyunsaturated, optionally mono- or polyvalent hydro carbon radical which also has further substitution, where the R⁵ and R⁶ radicals are a monovalent hydrocarbon radical and the hydrocarbon radical may be bridged cycloaliphatically via the fragment Y, where
Y may be absent or else is a methylene bridge having 1 or 2 methylene units, with the proviso that, when Y is absent, the R² or R³ radicals are each independently a linear or branched radical having 1 to 20 carbon atoms,
R⁴ is a glycidyloxypropyl group which is bonded via an ether or ester function to a linear or branched alkyl radial of 1 to 24 carbon atoms or via an aromatic or cycloaliphatic radical,
n is an integer of 2 to 8 and R⁷ and R⁸ are each independently hydrogen or alkyl, alkoxy, aryl or aralkyl groups, and
R⁹, R¹⁰, R¹¹ and R¹² are each independently hydrogen or alkyl, alkenyl, alkoxy, aryl or aralkyl groups, where the alkyl radical or alkenyl radical may be bridged cycloaliphatically or aromatically via the Z fragment, where Z may be either a divalent alkylene radical or alkenylene radical.

4. Process according to at least one of Claims 1 to 3, **characterized in that** the reaction is carried out in solvents or suspension media and/or mixtures thereof.

5. Process according to Claim 3, **characterized in that** the reaction is carried out in one or more inert solvents.

6. Process according to Claim 3, **characterized in that** the reaction is carried out using one or more starter compounds of the formula (VII) as solvents or suspension media, if appropriate in the presence of further inert solvents or suspension media.

7. Process according to at least one of Claims 1 to 6, **characterized in that** the epoxide components, lactones, cyclic anhydrides of the formulae (I) to (VI) are metered in alone or in mixtures with one another in any sequence and in variable amounts successively or simultaneously in parallel to one another or else each in successive alternation.

8. Process according to at least one of Claims 1 to 7, **characterized in that** the alkoxylation of the epoxy-functional alkoxysilanes (I), optionally in the presence of further epoxide compounds of the formula (II) or (III) and/or comonomers of the formula (IV), (V) and/or (VI), is carried out in the presence of carbon dioxide.

9. Process according to Claim 8, **characterized in that** carbonate group-modified polyethers or polyetheresters are prepared by insertion of carbon dioxide into the modified polymer chain.

10. Process according to at least one of Claims 1 to 9, **characterized in that** the starters of the formula R¹-H (VII) used are compounds having molar masses of 50 to 10 000 g/mol and having 1 to 8 hydroxyl groups in the molecule and/or low molecular weight polyetherols having 1-8 hydroxyl groups and molar masses of 50 to 2000 g/mol.

11. Process according to at least one of Claims 1 to 9, **characterized in that** the starters of the formula R¹-H (VII) used are allyl alcohol, butanol, octanol, dodecanol, stearyl alcohol, 2-ethylhexanol, cyclohexanol, benzyl alcohol, ethylene glycol, propylene glycol, di-, tri- and polyethylene glycol, 1,2-propylene glycol, di- and/or polypropylene glycol, poly-THF, OH-functional polyolefins such as OH-functional polybutadiene, 1,4-butanediol, 1,6-hexanediol, 1,4-butynediol, tetramethyldecynediol, trimethylolpropane, glycerol, pentaerythritol, sorbitol, cellulose sugar, lignin or also and/or further compounds which are based on natural substances and bear hydroxyl groups and/or phenol, alkyl- and arylphenols, bisphenol A and novolacs.

12. Process according to at least one of Claims 1 to 11, **characterized in that** the molar ratio of epoxy-functional compounds (I) to (VI) relative to reactive groups, especially OH groups, in the products is 1 to 10⁵ : 1.

13. Process according to at least one of Claims 1 to 12, **characterized in that** the reaction is effected continuously, semicontinuously or else batchwise.

14. Compounds prepared by a process according to at least one of Claims 1 to 13, with the proviso that the compounds of the formulae 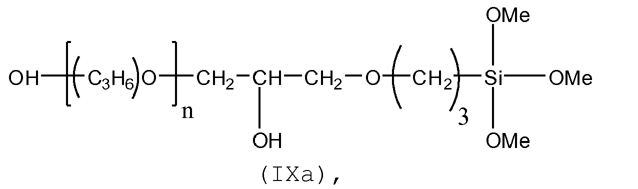 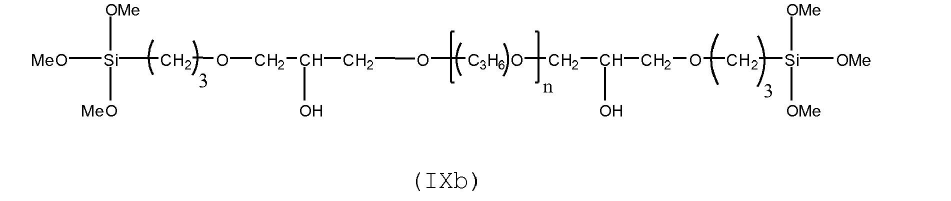 and 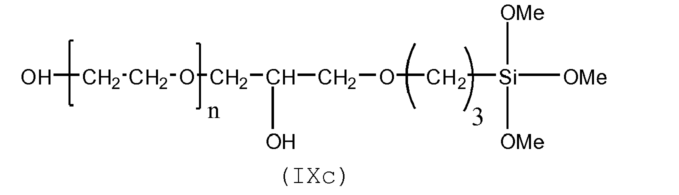 and 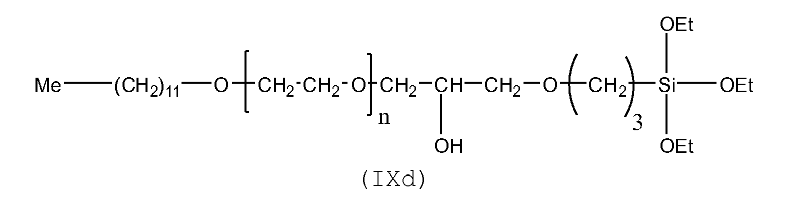 are not included.

15. Compounds according to Claim 14 containing a -O-(CH₂)_{c} -Si(R)_{b}, (OR)ₐ-, **characterized in that** each -O-(CH₂) -Si(R)_{b}(OR)ₐ- group is always incorporated into the prepolymer formed via an intermediate alpha-oxypropylene functionality.

16. Alkoxysilane polyether of the formula (VIII) 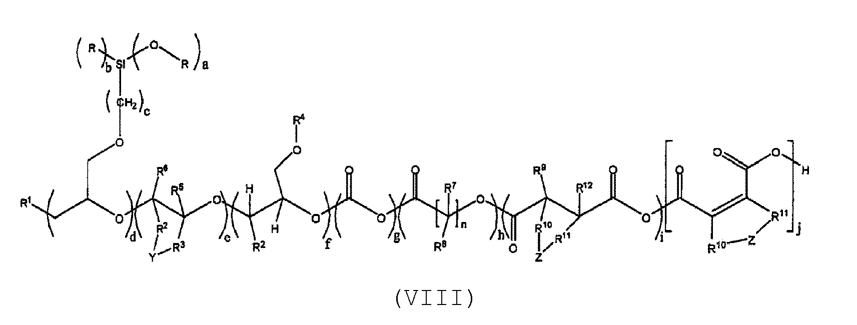 where
d is an integer of 1 to 1000,
e is an integer of 0 to 10 000,
f is an integer of 0 to 1000,
g is an integer of 0 to 1000,
h, i and j are integers of 0 to 500, and with the proviso that the fragments with the indices d to j are freely permutable with one another,
and
where
R corresponds to one or more identical or different radicals selected from linear and branched, saturated, monounsaturated and polyunsaturated alkyl radicals having 1 to 20 carbon atoms and haloalkyl groups having 1 to 20 carbon atoms, and
c is an integer of 0 to 18,
R¹ corresponds to a saturated or unsaturated, optionally branched radical, to a polyether radical of the alkoxy, arylalkoxy or alkylarylalkoxy group type, in which the carbon chain may be interrupted by oxygen atoms, a polyetheralkoxy radical or a singularly or multiply fused phenolic group,
R² and R³, and R⁵ and R⁶, are the same or else are each independently H or a saturated or optionally mono- or polyunsaturated, optionally mono- or polyvalent hydro carbon radical which also has further substitution, where the R⁵ and R⁶ radicals are a monovalent hydrocarbon radical and the hydrocarbon radical may be bridged cycloaliphatically via the fragment Y, where
Y may be absent or else is a methylene bridge having 1 or 2 methylene units, with the proviso that, when Y is absent, the R² or R³ radicals are each independently a linear or branched radical having 1 to 20 carbon atoms,
R⁴ is a glycidyloxypropyl group which is bonded via an ether or ester function to a linear or branched alkyl radial of 1 to 24 carbon atoms or via an aromatic or cycloaliphatic radical,
n is an integer of 2 to 8 and R⁷ and R⁸ are each independently hydrogen or alkyl, alkoxy, aryl or aralkyl groups, and
R⁹, R¹⁰, R¹¹ and R¹² are each independently hydrogen or alkyl, alkenyl, alkoxy, aryl or aralkyl groups, where the alkyl radical or alkenyl radical may be bridged cycloaliphatically or aromatically via the Z fragment, where Z may be either a divalent alkylene radical or alkenylene radical,
with the proviso that the compounds of the formulae 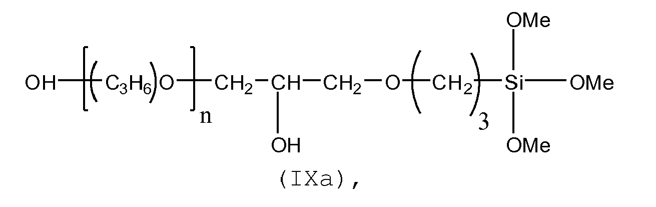 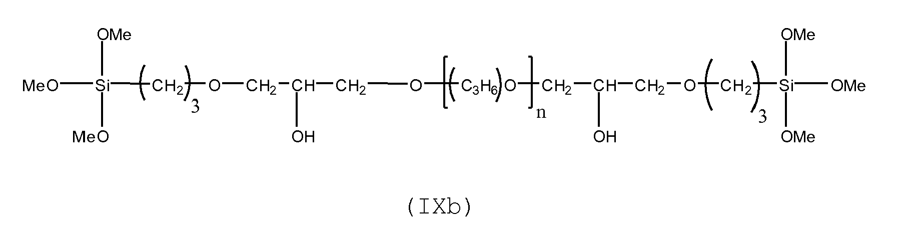 and 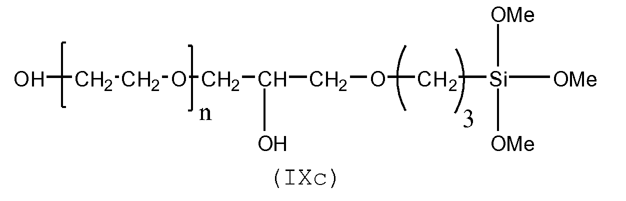 and 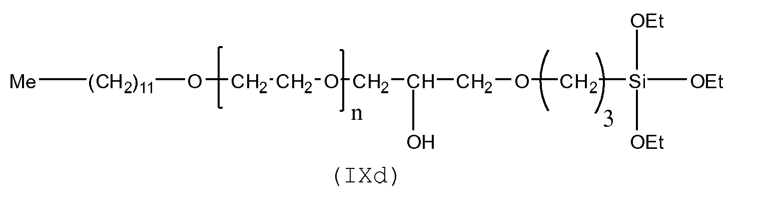 are not included.

17. Compounds according to Claim 16, **characterized in that** the index d is greater than 4.

18. Compounds according to Claim 16, **characterized in that** at least one of the indices e to j in the formula (VIII) is greater than or equal to 0.

19. Compounds according to at least one of Claims 16 to 18, **characterized in that** the sum total of the indices (a) and (b) in formula (VIII) has a statistical average of less than 3.

20. Compounds according to Claim 14 or 15, **characterized in that** the compounds of the formula (I) used are 3-glycidyloxypropyltrimethoxysilane, 3-glycidyloxypropyltriethoxysilane, 3-glycidyloxy-propyltripropoxysilane, 3-glycidyloxypropylmethyldimethoxysilane, 3-glycidyloxypropylethyldiethoxysilane and/or 3-glycidyloxypropyltriisopropoxysilane together with compounds of the formula (II), such as ethylene oxide, propylene oxide, 1,2- or 2,3-butylene oxide, isobutylene oxide, 1,2-dodecene oxide, styrene oxide, cyclohexene oxide, or 2,3-epoxy-1-propanol, and/or with compounds of the formula (III), such as allyl glycidyl ether, butyl glycidyl ether, 2-ethylhexyl glycidyl ether, C₁₂/C₁₄-fatty alcohol glycidyl ether, phenyl glycidyl ether, p-tert-butylphenyl glycidyl ether, o-cresyl glycidyl ether, glycidyl methacrylate, glycidyl acrylate or glycidyl neodecanoate, and/or with compounds of the formula (IV), such as ε-caprolactone or δ-valerolactone, and/or with compounds of the formula (V) or (VI), such as succinic anhydride, oct(en)yl, dec(en)yl and dodec(en)yl succinic anhydride, maleic anhydride, phthalic anhydride, hexahydro-, tetrahydro-, dihydro-, methylhexahydro- or methyltetrahydrophthalic anhydride, alone or in mixtures with one another.

21. Compounds prepared according to Claim 14, **characterized in that** R¹ is a polyether fragment and in which at least one fragment which has been inserted into the forming modified polymer chain as a result of the reaction with ring-opening of the reaction components of the formulae (I) to (VI), with the proviso that the fragment formed in the ring-opening of the compounds of the formula (I) is not terminal.

22. Compounds prepared according to Claim 14, **characterized in that** no mono-alkoxysilyl-terminal species are present.

23. Compounds prepared according to Claim 14, **characterized in that** mono-alkoxysilyl-terminated species which form using exclusively those alkylene oxide monomers of the formula (II) in which, simultaneously, the R², R³, R⁵, R⁶ radicals are either all hydrogen, or in which R², R³, R⁵ are each hydrogen and R⁶ is methyl, or in which R², R³, R⁶ are each hydrogen and R⁵ is methyl, are excluded.

24. Compounds prepared according to Claim 14, **characterized in that** at least one fragment formed by the reaction with ring-opening of the reaction components of the formulae (III) to (VI) has been inserted into the forming modified polymer chain.

25. Compounds prepared according to Claim 14, **characterized in that** R¹ is not a polyether fragment.

26. Use of compounds according to at least one of Claims 14 to 25 for producing adhesives and sealants, for surface coating, as reactive crosslinkers, as adhesion promoters and primers or for surface treatment of pigments and fillers in coatings or plastics.

27. Use of compounds prepared by one of the processes according to Claims 1 to 13 for producing adhesives and sealants, for surface coating, as reactive crosslinkers, as adhesion promoters and primers, or for surface treatment of pigments and fillers in coatings or plastics.

## Revendications

1. Procédé de fabrication de polyéther-alcools comprenant des groupes alcoxysilyle par catalyse DMC, **caractérisé en ce qu'**un ou plusieurs alcoxysilanes à fonction époxyde sont ajoutés individuellement ou en mélange avec d'autres composés époxyde et éventuellement d'autres comonomères, selon une distribution en séquence ou statistique, sur un démarreur de chaîne de formule (VII)
R¹-H (VII)
contenant au moins un groupe hydroxyle réactif, R¹ représentant un radical saturé ou insaturé, éventuellement ramifié, ou un radical polyéther du type d'un groupe alcoxy, arylalcoxy ou alkylarylalcoxy, dans lequel la chaîne carbonée peut être interrompue par des atomes d'oxygène, ou correspond à un radical polyéther-alcoxy ou un groupe phénolique annelé une ou plusieurs fois.

2. Procédé selon la revendication 1, **caractérisé en ce qu'**un composé de formule (I) est utilisé en tant qu'alcoxysilane à fonction époxyde 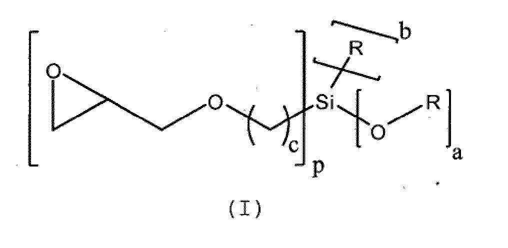 dans laquelle
R correspond à un ou plusieurs radicaux identiques ou différents, choisis parmi les radicaux alkyle linéaires ou ramifiés, saturés, mono- ou polyinsaturés, contenant 1 à 20 atomes de carbone, ou les groupes halogénoalkyle contenant 1 à 20 atomes de carbone, et
a représente un nombre entier de 1 à 3,
b représente un nombre entier de 0 à 2, la somme de a et b est égale à 3,
c représente un nombre entier de 0 à 24 et
p représente un nombre entier qui correspond à la différence de 4-a-b.

3. Procédé selon la revendication 1 ou 2, **caractérisé en ce qu'**un ou plusieurs alcoxysilanes à fonction époxyde de formule (I) 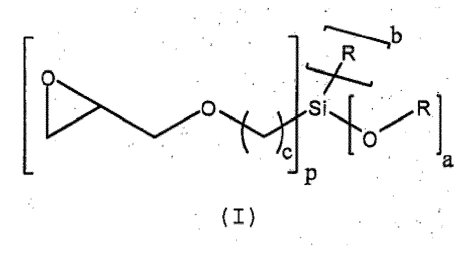 sont ajoutés individuellement ou en mélange avec d'autres composés époxyde de formule (II) 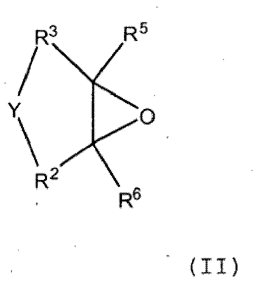 et/ou (III) 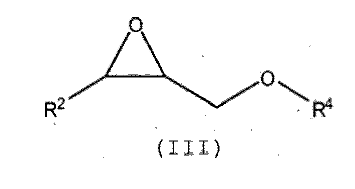 et/ou éventuellement d'autres comonomères tels que des lactones (IV) 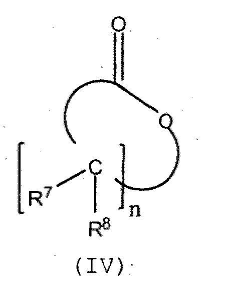 et/ou des anhydrides cycliques (V), (VI) 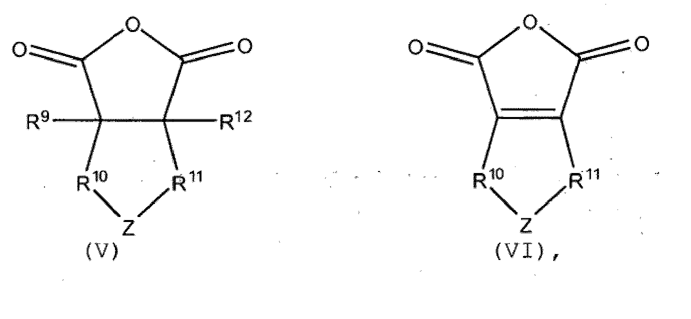 et/ou du dioxyde de carbone et/ou des oxétanes, selon une distribution en séquence ou statistique, sur un démarreur de chaîne de formule (VII)
R¹-H (VII)
contenant au moins un hydrogène réactif,
R correspondant à un ou plusieurs radicaux identiques ou différents, choisis parmi les radicaux alkyle linéaires ou ramifiés, saturés, mono- ou polyinsaturés, contenant 1 à 20 atomes de carbone, ou les groupes halogénoalkyle contenant 1 à 20 atomes de carbone, et
a représentant un nombre entier de 1 à 3,
b représentant un nombre entier de 0 à 2, la somme de a et b étant égale à 3,
c représentant un nombre entier de 0 à 24, et
p représentant un nombre entier qui correspond à la différence de 4-a-b,
R¹ correspondant à un radical saturé ou insaturé, éventuellement ramifié, un radical polyéther du type d'un groupe alcoxy, arylalcoxy ou alkylarylalcoxy, dans lequel la chaîne carbonée peut être interrompue par des atomes d'oxygène, un radical polyéther-alcoxy ou un groupe phénolique annelé une ou plusieurs fois,
R² ou R³, et R⁵ ou R⁶ représentant de manière identique ou également indépendamment les uns des autres H ou un radical hydrocarboné saturé ou éventuellement mono- ou polyinsaturé, également davantage substitué, éventuellement mono- ou polyvalent, les radicaux R⁵ ou R⁶ représentant un radical hydrocarboné monovalent et le radical hydrocarboné pouvant être ponté de manière cycloaliphatique par le fragment Y,
Y pouvant ne pas être présent ou représentant un pont méthylène contenant 1 ou 2 unités méthylène, à condition que lorsque Y n'est pas présent, les radicaux R² ou R³ représentent indépendamment l'un de l'autre un radical linéaire ou ramifié contenant 1 à 20 atomes de carbone,
R⁴ représentant un groupe glycidyloxypropyle, qui est relié par une fonction éther ou ester à un radical alkyle linéaire ou ramifié de 1 à 24 atomes de carbone, ou par un radical aromatique ou cycloaliphatique,
n représentant un nombre entier de 2 à 8, et R⁷ et R⁸ représentant indépendamment l'un de l'autre l'hydrogène, des groupes alkyle, alcoxy, aryle ou aralkyle, et
R⁹, R¹⁰, R¹¹ et R¹² représentant indépendamment les uns des autres l'hydrogène, des groupes alkyle, alcényle, alcoxy, aryle ou aralkyle, le radical alkyle ou le radical alcényle pouvant être ponté de manière cycloaliphatique ou aromatique par le fragment Z, Z pouvant représenter un radical alkylène ou alcénylène bivalent.

4. Procédé selon au moins l'une quelconque des revendications 1 à 3, **caractérisé en ce que** la réaction est réalisée dans des solvants ou des agents de suspension et/ou leurs mélanges.

5. Procédé selon la revendication 3, **caractérisé en ce que** la réaction est réalisée dans un ou plusieurs solvants inertes.

6. Procédé selon la revendication 3, **caractérisé en ce que** la réaction est réalisée en utilisant un ou plusieurs composés de départ de formule (VII) en tant que solvant ou agent de suspension, éventuellement en présence d'autres solvants ou agents de suspension inertes.

7. Procédé selon au moins l'une quelconque des revendications 1 à 6, **caractérisé en ce que** l'introduction des composants époxyde, des lactones, des anhydrides cycliques de formules (I) à (VI) a lieu individuellement ou en mélange les uns avec les autres dans un ordre quelconque et en une quantité variable les uns après les autres, ou en parallèle les uns aux autres dans le temps, ou également chacun successivement en alternance.

8. Procédé selon au moins l'une quelconque des revendications 1 à 7, **caractérisé en ce que** l'alcoxylation des alcoxysilanes à fonction époxyde (I), éventuellement en présence d'autres composés époxyde de formule (II) ou (III) et/ou de comonomères de formule (IV), (V) et/ou (VI), est réalisée en présence de dioxyde de carbone.

9. Procédé selon la revendication 8, **caractérisé en ce que** des polyéthers ou polyéther-esters modifiés par des groupes carbonate sont fabriqués par insertion de dioxyde de carbone dans la chaîne polymère modifiée.

10. Procédé selon au moins l'une quelconque des revendications 1 à 9, **caractérisé en ce que** des composés ayant des masses molaires de 50 à 10 000 g/mol et contenant 1 à 8 groupes hydroxyle par molécule et/ou des polyétherols de faible poids moléculaire contenant 1 à 8 groupes hydroxyle et ayant des masses molaires de 50 à 2 000 g/mol sont utilisés en tant que démarreur de formule R¹-H (VII).

11. Procédé selon au moins l'une quelconque des revendications 1 à 9, **caractérisé en ce que** l'alcool allylique, le butanol, l'octanol, le dodécanol, l'alcool stéarylique, le 2-éthylhexanol, le cyclohexanol, l'alcool benzylique, l'éthylène glycol, le propylène glycol, le di-, tri- et polyéthylène glycol, le 1,2-propylène glycol, le di- et/ou polypropylène glycol, le poly-THF, les polyoléfines à fonction OH, telles que le polybutadiène à fonction OH, le 1,4-butanediol, le 1,6-hexanediol, le 1,4-butynediol, le tétraméthyldécynediol, le triméthylolpropane, la glycérine, la pentaérythrite, le sorbitol, le sucre de cellulose, la lignine ou également et/ou d'autres composés portant des groupes hydroxyle à base de substances naturelles et/ou le phénol, les alkyl- et arylphénols, le bisphénol A et les novolaques sont utilisés en tant que démarreur de formule R¹-H (VII).

12. Procédé selon au moins l'une quelconque des revendications 1 à 11, **caractérisé en ce que** le rapport molaire entre les composés à fonction époxyde (I) à (VI) et les groupes réactifs, notamment les groupes OH, dans les produits est de 1 à 10⁵ sur 1.

13. Procédé selon au moins l'une quelconque des revendications 1 à 12, **caractérisé en ce que** la réaction a lieu de manière continue, semi-continue ou également discontinue.

14. Composés, fabriqués par un procédé selon au moins l'une quelconque des revendications 1 à 13, à condition que les composés ne soient pas compris par les formules 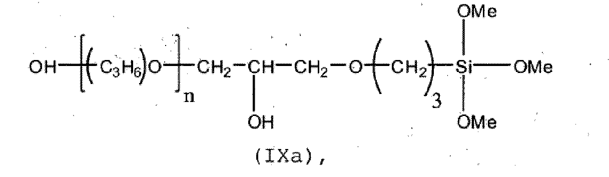 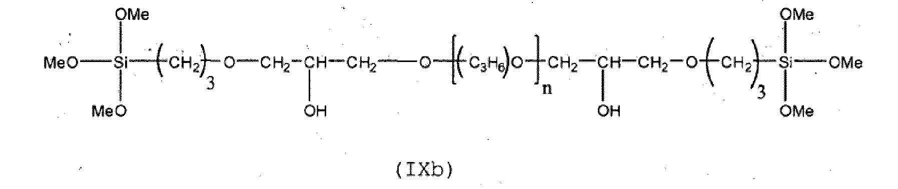 et 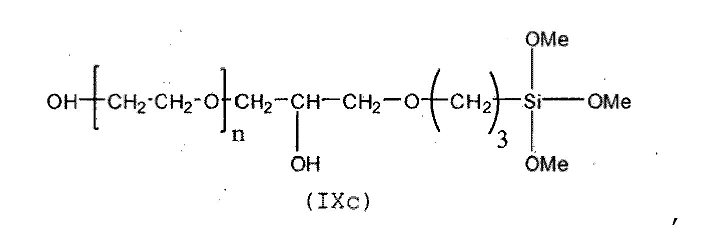 ainsi que

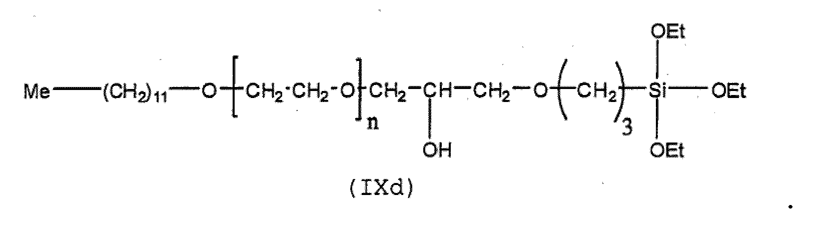

15. Composés selon la revendication 14, contenant un groupe -O-(CH₂)_{c}-Si(R)_{b}(OR)ₐ-, **caractérisés en ce que** chaque groupe -O-(CH₂)_{c}-Si(R)_{b}(OR)ₐ- est relié dans le prépolymère formé par une fonctionnalité oxypropylène intermédiaire en alpha.

16. Alcoxysilanepolyéther de formule (VIII) 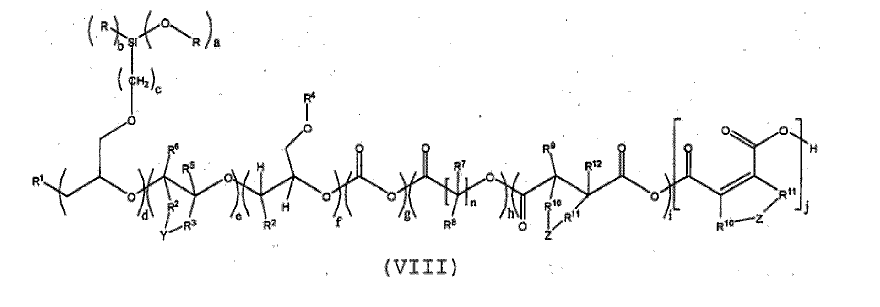 dans laquelle
d représente un nombre entier de 1 à 1 000,
e représente un nombre entier de 0 à 10 000,
f représente un nombre entier de 0 à 1 000,
g représente un nombre entier de 0 à 1 000, h, i et j représentent des nombres entiers de 0 à 500,
à condition que les fragments présentant les indices d à j soient librement permutables les uns avec les autres, et
R correspond à un ou plusieurs radicaux identiques ou différents, choisis parmi les radicaux alkyle linéaires ou ramifiés, saturés, mono- ou polyinsaturés, contenant 1 à 20 atomes de carbone, ou les groupes halogénoalkyle contenant 1 à 20 atomes de carbone, et
c représente un nombre entier de 0 à 18,
R¹ correspond à un radical saturé ou insaturé, éventuellement ramifié, un radical polyéther du type d'un groupe alcoxy, arylalcoxy ou alkylarylalcoxy, dans lequel la chaîne carbonée peut être interrompue par des atomes d'oxygène, un radical polyétheralcoxy ou un groupe phénolique annelé une ou plusieurs fois,
R² ou R³, et R⁵ ou R⁶ représentent de manière identique ou également indépendamment les uns des autres H ou un radical hydrocarboné saturé ou éventuellement mono- ou polyinsaturé, également davantage substitué, éventuellement mono- ou polyvalent, les radicaux R⁵ ou R⁶ représentant un radical hydrocarboné monovalent et le radical hydrocarboné pouvant être ponté de manière cycloaliphatique par le fragment Y,
Y pouvant ne pas être présent ou représentant un pont méthylène contenant 1 ou 2 unités méthylène, à condition que lorsque Y n'est pas présent, les radicaux R² ou R³ représentent indépendamment l'un de l'autre un radical linéaire ou ramifié contenant 1 à 20 atomes de carbone,
R⁴ représente un groupe glycidyloxypropyle, qui est relié par une fonction éther ou ester à un radical alkyle linéaire ou ramifié de 1 à 24 atomes de carbone, ou par un radical aromatique ou cycloaliphatique,
n représente un nombre entier de 2 à 8, et R⁷ et R⁸ représentent indépendamment l'un de l'autre l'hydrogène, des groupes alkyle, alcoxy, aryle ou aralkyle, et
R⁹, R¹⁰, R¹¹ et R¹² représentent indépendamment les uns des autres l'hydrogène, des groupes alkyle, alcényle, alcoxy, aryle ou aralkyle, le radical alkyle ou le radical alcényle pouvant être ponté de manière cycloaliphatique ou aromatique par le fragment Z, Z pouvant représenter un radical alkylène ou alcénylène bivalent,
à condition que les composés de formules 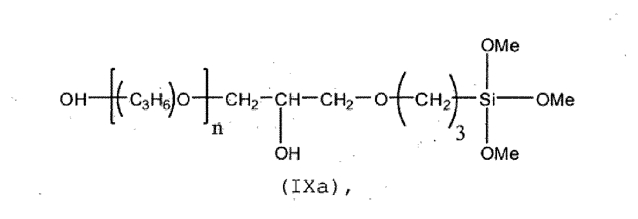 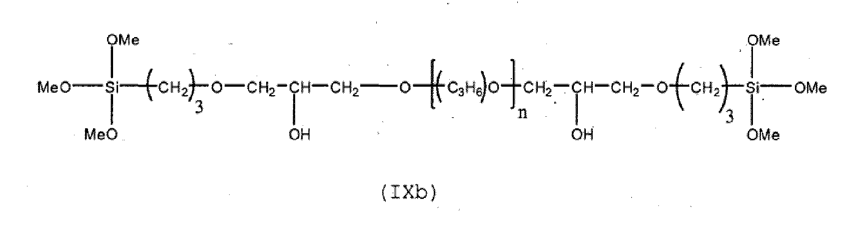 et 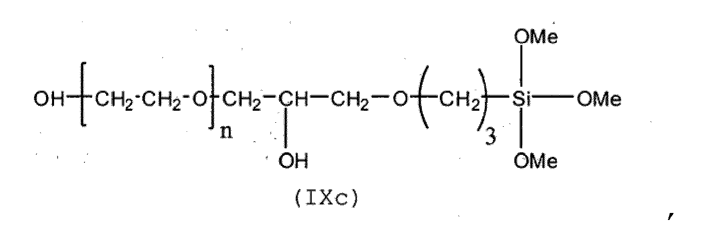 ainsi que 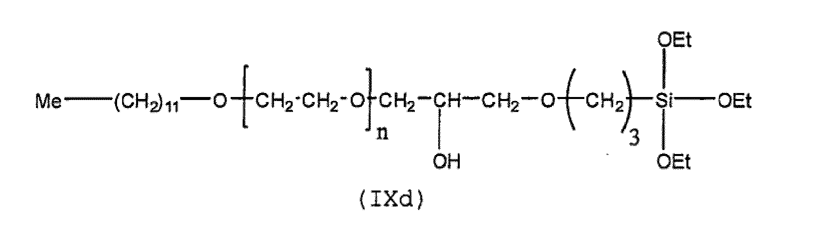 ne soient pas compris.

17. Composés selon la revendication 16, **caractérisés en ce que** l'indice d est supérieur à 4.

18. Composés selon la revendication 16, **caractérisés en ce qu'**au moins un des indices e à j de la formule (VIII) est supérieur ou égal à 0.

19. Composés selon au moins l'une quelconque des revendications 16 à 18, **caractérisés en ce que** la somme des indices (a) et (b) dans la formule (VIII) est inférieure à 3 en moyenne statistique.

20. Composés selon la revendication 14 ou 15, **caractérisés en ce que** du 3-glycidyloxypropyltriméthoxysilane, du 3-glycidyloxypropyltriéthoxysilane, du 3-glycidyloxypropyltripropoxysilane, du 3-glycidyloxypropylméthyldiméthoxysilane, du 3-glycidyloxypropyléthyldiéthoxysilane et/ou du 3-glycidyloxypropyltriisopropoxysilane est utilisé en tant que composés de formule (I), conjointement avec des composés de formule (II), tels que l'oxyde d'éthylène, l'oxyde de propylène, l'oxyde de 1,2- ou 2,3-butylène, l'oxyde d'isobutylène, l'oxyde de 1,2-dodécène, l'oxyde de styrène, l'oxyde de cyclohexène ou le 2,3-époxy-1-propanol, et/ou avec des composés de formule (III), tels que l'éther allylique, butylique, 2-éthylhexylique, d'alcools gras en C₁₂/C₁₄, phénylique, p-tert.-butylphénylique, o-crésylglycidylique, le méthacrylate de glycidyle, l'acrylate de glycidyle ou l'ester glycidylique de l'acide néodécanoïque, et/ou avec des composés de formule (IV) tels que l'ε-caprolactone ou la δ-valérolactone, et/ou avec des composés de formule (V) ou (VI), tels que l'anhydride de l'acide succinique, l'anhydride de l'acide oct(én)yl-, déc(én)yl- et dodéc (én) ylsuccinique, l'anhydride de l'acide maléique, l'anhydride de l'acide phtalique, l'anhydrique de l'acide hexahydro-, tétrahydro-, dihydro-, méthylhexahydro- ou méthyltétrahydro-phtalique, seuls ou en mélanges les uns avec les autres.

21. Composés, fabriqués selon la revendication 14, **caractérisés en ce que** R¹ est un fragment polyéther et dans lesquels au moins un fragment, qui a été introduit par la réaction avec ouverture de cycle des composants de réaction des formules (I) à (VI) dans la chaîne polymère modifiée formée, est présent, à condition que le fragment formé lors de l'ouverture de cycle des composés de formule (I) ne soit pas en position terminale.

22. Composés, fabriqués selon la revendication 14, **caractérisés en ce qu'**aucune espèce à terminaison mono-alcoxysilyle n'est contenue.

23. Composés, fabriqués selon la revendication 14, **caractérisés en ce que** les espèces à terminaison mono-alcoxysilyle, qui sont formées en utilisant exclusivement des monomères oxyde d'alkylène de formule (II) dans lesquels les radicaux R², R³, R⁵, R⁶ représentent tous simultanément l'hydrogène ou dans lesquels R², R³, R⁵ représentent l'hydrogène et R⁶ représente méthyle ou dans lesquels R², R³, R⁶ représentent l'hydrogène et R⁵ représente méthyle, sont exclues.

24. Composés, fabriqués selon la revendication 14, **caractérisés en ce qu'**au moins un fragment formé par la réaction avec ouverture de cycle des composants de réaction des formules (III) à (VI) a été introduit dans la chaîne polymère modifiée formée.

25. Composés, fabriqués selon la revendication 14, **caractérisés en ce que** R¹ n'est pas un fragment polyéther.

26. Utilisation de composés selon au moins l'une quelconque des revendications 14 à 25, pour la fabrication de matériaux adhésifs et d'étanchéité, pour le revêtement de surfaces, en tant qu'agents de réticulation réactifs, en tant que promoteurs d'adhésion et amorces ou pour le traitement de surface de pigments et de charges dans des vernis ou des plastiques.

27. Utilisation de composés fabriqués par un des procédés selon les revendications 1 à 13 pour la fabrication de matériaux adhésifs et d'étanchéité, pour le revêtement de surfaces, en tant qu'agents de réticulation réactifs, en tant que promoteurs d'adhésion et amorces ou pour le traitement de surface de pigments et de charges dans des vernis ou des plastiques.
